# EUROPEAN PATENT APPLICATION

(11) **EP 2 615 846 A2**
(43) Date of publication of application: **17.07.2013**
(21) Application number: 12198785.3
(22) Date of filing: 20.12.2012
(51) Int. Cl.: H04N 21/418

(54) **Display apparatus, upgrading apparatus and control method of the same and display system**

(30) Priority: 27.12.2011 KR 20110143753; 28.12.2011 KR 20110144964; 27.01.2012 KR 20120008211; 27.01.2012 KR 20120008178; 23.05.2012 KR 20120054930
(71) Applicant: Samsung Electronics Co., Ltd., Gyeonggi-do 443-742 (KR)
(72) Inventor: Kwon, Jin-ho, Seoul (KR); Lee, Seung-yup, Gyeonggi-do (KR); Lee, Jung-won, Gyeonggi-do (KR); Oh, Jae-hwan, Seoul (KR); Lee, Jong-hwan, Gyeonggi-do (KR)
(74) Representative: Fearnside, Andrew Simon

(57) **Abstract**

A display apparatus includes a display unit, an image processor which processes an image signal that is input from an external source in at least one preset external input mode according to a preset image processing operation and displays an image on the display unit based on the processed image signal; a connector to which an upgrading apparatus which upgrades the preset image processing operation is connected, and a controller which, upon receiving packed data which combine a plurality of types of image data, and packing information of the packed data from the upgrading apparatus through the connector, controls the image processor to display an image on the display unit based on the plurality of types of image data which are unpacked based on the packing information.

## Description

### BACKGROUND

### Field

Apparatuses and methods consistent with the exemplary embodiments relate to a display apparatus, an upgrading apparatus and a control method of the same and a display system which processes an image signal supplied by an image supply source, according to a preset image processing operation and displays an image based on the processed image signal, and more particularly, to a display apparatus, an upgrading apparatus and a control method of the same and a display system which improves existing operations of the display apparatus upon a connection of the upgrading apparatus to the display apparatus.

### Description of the Related Art

A display apparatus processes image signals or image data which are supplied by various external image supply sources or stored in the display apparatus, and displays an image on a display panel based on the processed image signals/image data. For example, a display apparatus which is provided to users may include a TV or a monitor. The display apparatus which is realized as a TV provides an image of a desired broadcasting channel by processing a broadcasting signal supplied from the outside, according to various image processing operations such as decoding and scaling operations.

The display apparatus has an image processing board built therein including various chipsets and memories to perform the foregoing image processing operations. However, to be in line with the development of technology and to meet user's demands and to improve convenience, the display apparatus should perform better than a conventional display apparatus and provide more functions than a conventional display apparatus. To improve functions, i.e., to upgrade the display apparatus, perspectives of both hardware and software may be considered.

From the perspective of hardware, to upgrade the display apparatus, conventionally, all or at least a part of the image processing board built in the display apparatus should be replaced, and such replacement is not easy from the perspectives of both manufacturing and usage. Even from the perspective of software, driving more developed software requires corresponding hardware. As a result, users may have to purchase an upgraded display apparatus.

### SUMMARY

According to the present invention there is provided an apparatus and method as set forth in the appended claims. Other features of the invention will be apparent from the dependent claims, and the description which follows.

An exemplary embodiment provides a display apparatus including: a display unit; an image processor which processes an image signal that is input from an external source in at least one preset external input mode according to a preset image processing operation and displays an image on the display unit based on the processed image signal; a connector to which an upgrading apparatus which upgrades the preset image processing operation is connected; and a controller which, upon receiving packed data which combine a plurality of types of image data, and packing information of the packed data from the upgrading apparatus through the connector, controls the image processor to display an image on the display unit based on the plurality of types of image data which are unpacked based on the packing information.

The packed data may be generated by packing the different types of image data within a scope of an available data bandwidth of the connector.

The packed data may include image data and graphic data which overlap the image data.

The controller may receive a second image signal, which has been converted from a first image signal, from the upgrading apparatus through the connector, and the second image signal may be generated by assigning data of at least one first channel of a plurality of channels of the first image signal to at least one second channel of the plurality of channels.

The data of the at least one first channel may include an alpha value of an image.

The at least one second channel may correspond to two channels of RGB channels.

The image processor may include a plurality of signal transmitters which transmits an image signal and a digital signal including a sync signal corresponding to the image signal in parallel and a signal receiver which receives the image signal and the digital signal in parallel from the plurality of signal transmitters, and the controller may divide and transmit the image signal to a first signal transmitter and at least one second signal transmitter of the plurality of signal transmitters, and may control the plurality of signal transmitters to transmit the sync signal together with a part of the divided image signals through the first signal transmitter and to transmit a preset additional data signal rather than the sync signal together with the remaining divided image signal through the at least one second signal transmitter.

The controller may merge the divided image signals which are received by the signal receiver, and may process the merged image signal according to the sync signal transmitted by the first signal transmitter.

The first and second signal transmitters may each include a clock transmission channel to transmit a clock signal and a data transmission channel to transmit data in a preset bit according to the clock signal, and the controller may transmit the sync signal data through the data transmission channel of the first signal transmitter and does not transmit the sync signal data through the data transmission channel of the at least one second signal transmitter.

The signal transmitters may transmit the digital signal in parallel according to low voltage differential signaling (LVDS) standards.

The sync signal may include a horizontal sync signal, a vertical sync signal and a data enable signal.

The controller may transmit to the upgrading apparatus difference value information indicating a difference between first sync information and second sync information to enable the upgrading apparatus to output the image signal with the first sync information adjusted to synchronize the first sync information with the second sync information, the first sync information may correspond to a first timing at which the image signal is transmitted by the upgrading apparatus to the display apparatus, and the second sync information may correspond to a second timing at which the image signal is output to the display unit.

The controller may compare a sync timing at the first timing and a sync timing at the second timing, and may transmit the difference value information to the upgrading apparatus so that the image signal is output by the upgrading apparatus corresponding to a timing which compensates for a difference value between the sync timings.

The timing which compensates for the difference value may be generated by an operation of enlarging a blanking interval of the image signal output by the upgrading apparatus to the display apparatus if the sync timing at the first timing is prior to the sync timing at the second timing, and an operation of reducing the blanking interval if the sync timing at the first timing is subsequent to the sync timing of the second timing.

The difference value information may include at least one of clock count information of the sync timing at the second timing, time information at the second timing, and a difference value of the sync timing with respect to a reference clock corresponding to the second timing.

Another exemplary embodiment provides an upgrading apparatus of a display apparatus including: a connector which is connected to the display apparatus that processes an image signal input in at least one preset external input mode according to a preset image processing operation and displays an image based on the processed image signal; an image processor which upgrades the preset image processing operation if the display apparatus is connected to the connector; and a controller which generates packed data that are formed by combining and packing a plurality of types of image data, and packing information of the packed data, and transmits the packed data and the packing information to the display apparatus to display an image based on the plurality of types of image data which are formed by unpacking the packed data based on the packing information.

The packed data may be formed by packing the different types of image data within a scope of an available data bandwidth in which the display apparatus receives data.

The packed data may include image data and graphic data which overlap the image data.

The controller may transmit a second signal, which is converted from a first image signal, to the display apparatus through the connector, and the second image signal may be generated by assigning data of at least one first channel of a plurality of channels of the first image signal to at least one second channel of the plurality of channels.

The data of the first channel may include an alpha value of an image.

The second channel may correspond to two channels of RGB channels.

The image processor may include a plurality of signal transmitters which transmits an image signal and a digital signal including a sync signal corresponding to the image signal in parallel, and a signal receiver which receives the image signal and the digital signal in parallel from the plurality of signal transmitters, and the controller may divide and transmit the image signal to a first signal transmitter and at least one second signal transmitter of the plurality of signal transmitters, and may control the plurality of signal transmitters to transmit the sync signal together with a part of the divided image signals through the first signal transmitter, and to transmit a preset additional data signal rather than the sync signal together with the remaining divided image signal through the at least one second signal transmitter.

The controller may merge the divided image signals received by the signal receiver, and may process the merged image signal according to the sync signal transmitted by the first signal transmitter.

The first and second signal transmitters may each include a clock transmission channel to transmit a clock signal and a data transmission channel to transmit data in a preset bit according to the clock signal, and the controller may transmit sync signal data through the data transmission channel of the first signal transmitter, and does not transmit the sync signal data through the data transmission channel of the at least one second signal transmitter.

The signal transmitters may transmit the digital signal according to LVDS standards.

The sync signal may include a horizontal sync signal, a vertical sync signal and a data enable signal.

The controller may control the image processor to output the image signal having adjusted first sync information to the display apparatus to synchronize the first sync information with second sync information, upon receiving difference value information indicating a difference between the first sync information and the second sync information from the display apparatus, and the first sync information may correspond to a first timing at which the image signal is transmitted by the upgrading apparatus to the display apparatus, and the second sync information may correspond to a second timing at which the image signal is output to the display unit of the display apparatus.

The controller may control the image signal corresponding to a timing compensating for a difference value between a sync timing at the first timing and a sync timing at the second timing for the image signal if the difference value is transmitted by the display apparatus.

The timing compensating for the difference value may be generated by an operation of enlarging a blanking interval of the image signal output by the upgrading apparatus to the display apparatus if the sync timing at the first timing is prior to the sync timing at the second timing, and an operation of reducing the blanking interval if the sync timing at the first timing is subsequent to the sync timing of the second timing.

The difference value information may include at least one of clock count information of the sync timing at the second timing, time information at the second timing, and a difference value of the sync timing with respect to a reference clock corresponding to the second timing.

Still another exemplary embodiment provides a control method of a display apparatus which processes an image signal input in at least one preset external input mode according to a preset image processing operation and displays an image based on the processed image signal, the control method including: connecting to an upgrading apparatus which upgrades the preset image processing operation; receiving packed data which combine and pack a plurality of types of image data and packing information of the packed data from the upgrading apparatus; and unpacking the packed data into the plurality of types of image data based on the packing information and displaying an image based on the plurality of types of unpacked image data.

Yet another exemplary embodiment provides a control method of an upgrading apparatus of a display apparatus, the control method including: connecting to the display apparatus which processes an image signal input in at least one preset external input mode according to a preset image processing operation and displays an image based on the processed image signal; processing a plurality of types of image data by upgrading the preset image processing operation; and generating packed data which combine and pack the plurality of types of image data and packing information of the packed data, and transmitting to the display apparatus the packed data and the packing information to display an image based on the plurality of types of image data formed by unpacking the packed data based on the packing information.

Yet another exemplary embodiment provides a a display system including: a display apparatus which processes an image signal input in at least one preset external input mode according to a preset image processing operation and displays an image based on the processed image signal; and an upgrading apparatus which is connected to the display apparatus to upgrade the preset image processing operation and processes the image signal according to the upgraded image processing operation, wherein the upgrading apparatus transmits to the display apparatus packed data which combine and pack a plurality of types of image data and packing information of the packed data, and the display apparatus unpacks the packed data based on the packing information and displays an image based on the plurality of types of unpacked image data.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates an example of a display system according to a first exemplary embodiment;
FIG. 2 is a block diagram of the display system in FIG. 1;
FIGS. 3 and 4 illustrate examples of upgrading an image processing operation of a display apparatus by an upgrading apparatus in the display system in FIG. 1;
FIG. 5 is a block diagram of some elements of the upgrading apparatus and the display apparatus in FIG. 1;
FIG. 6 illustrates a brief data waveform which is provided to explain image data packing in FIG. 5;
FIG. 7 illustrates image data which are provided to explain image data packing in FIG. 5;
FIG. 8 is a control flowchart showing a control method of the upgrading apparatus and the display apparatus in FIG. 5;
FIG. 9 is a flowchart of a control method of an upgrading apparatus according to a second exemplary embodiment;
FIG. 10 is a block diagram which specifically shows conversion and transmission processes of first and second image signals according to the second exemplary embodiment;
FIG. 11 illustrates an example of a channel configuration of the first image signal according to the second exemplary embodiment;
FIG. 12 illustrates an example of a channel configuration of the second image signal, which is converted from the first image signal, according to the second exemplary embodiment;
FIG. 13 illustrates a table which shows a pixel data configuration of a second channel Ch 0 as one of the channels of the second image signal according to the second exemplary embodiment;
FIG. 14 is a flowchart of a control method of the display apparatus according to the second exemplary embodiment;
FIG. 15 is a block diagram of a digital signal transmission configuration between a signal transmitter and a signal receiver in a display system according to a third exemplary embodiment;
FIG. 16 illustrates an example of a sync signal which is included in a digital signal in the display system in FIG. 15;
FIG. 17 illustrates an example of a data bit configuration of a digital signal which is transmitted per clock in the display system in FIG. 15;
FIG. 18 illustrates an example of transmitting a digital signal when there are four signal transmitters in the display system in FIG. 15;
FIG. 19 is a control flowchart of a signal transmission method of the display system in FIG. 15;
FIG. 20 is a flowchart of a method of outputting an image signal by an upgrading apparatus to a display apparatus in a display system according to a fourth exemplary embodiment;
FIG. 21 illustrates an example of adjusting a sync timing at a first timing when the sync timing at the first timing is prior to a sync timing at a second timing in the display system in FIG. 20; and
FIG. 22 illustrates an example of adjusting a sync timing at the first timing if the sync timing at the first timing is subsequent to the sync timing at the second timing in the display system in FIG. 20.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

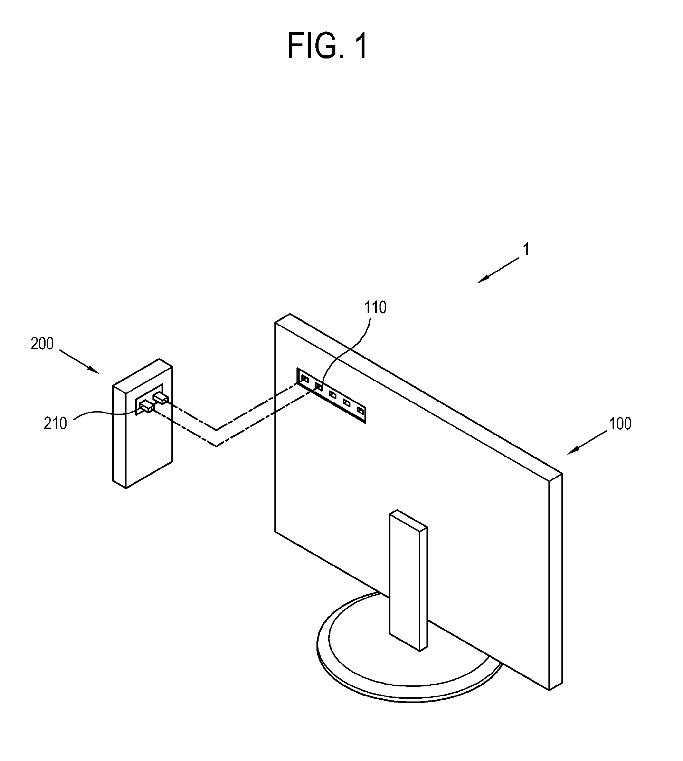

FIG. 1 illustrates an example of a display system 1 according to an exemplary embodiment.

As shown therein, the display system 1 according to the present exemplary embodiment includes a display apparatus 100 which processes an image signal supplied by an external image supply source (not shown), according to a preset image processing operation, and displays an image based on the processed image signal, and an upgrading apparatus 200 which upgrades hardware and/or software of the display apparatus 100.

The display apparatus 100 of the display system 1 according to the present exemplary embodiment is realized as a TV which displays a broadcasting image based on broadcasting signals and/or broadcasting information and/or broadcasting data which are transmitted by transmission equipment of a broadcasting station. However, it is understood that aspects of the present invention are not limited to the foregoing embodiment type of the display apparatus 100. The display apparatus 100 may include other various embodiments which may display an image, such as a computer monitor, etc.

The type of an image which is displayable by the display apparatus 100 is not limited to the broadcasting image, and may alternatively or additionally include a video, still image, applications, an on screen display (OSD), and a graphic user interface (GUI) to control various operations, based on signals and/or data transmitted by external various image sources.

The upgrading apparatus 200 is connected to the display apparatus 100 for communication. The upgrading apparatus 200 upgrades existing hardware and/or software of the connected display apparatus 100, and enables the upgraded hardware and/or software of the display apparatus 100 to process an image signal and display an image with an improved quality.

The upgrading apparatus 200 may be connected to the display apparatus 100 in a wired and/or wireless manner. The upgrading apparatus 200 according to the present exemplary embodiment is connected to the display apparatus 100 in a wired manner to transmit and receive data and/or information and/or signals and/or power to and/or from the display apparatus 200. The display apparatus 100 and the upgrading apparatus 200 include connectors and/or terminals 110 and 210, respectively, for a mutual physical and/or electric connection.

Alternatively, the upgrading apparatus 200 may be connected to the display apparatus 100 in a wireless manner, in which case, the upgrading apparatus 200 receives power from an additional external power source or a battery. However, in the present exemplary embodiment, explanation will be provided only with respect to the wired connection of the upgrading apparatus 200 to the display apparatus 100.

The display apparatus 100 may solely process an image signal, which is transmitted from the outside, according to a preset image processing operation and display an image based on the processed image signal. According to the present exemplary embodiment, by the connection of the display apparatus 100 and the upgrading apparatus 200, hardware and/or software of the display system 1 which performs the foregoing image processing operation are upgraded and an image with an improved quality may be provided.

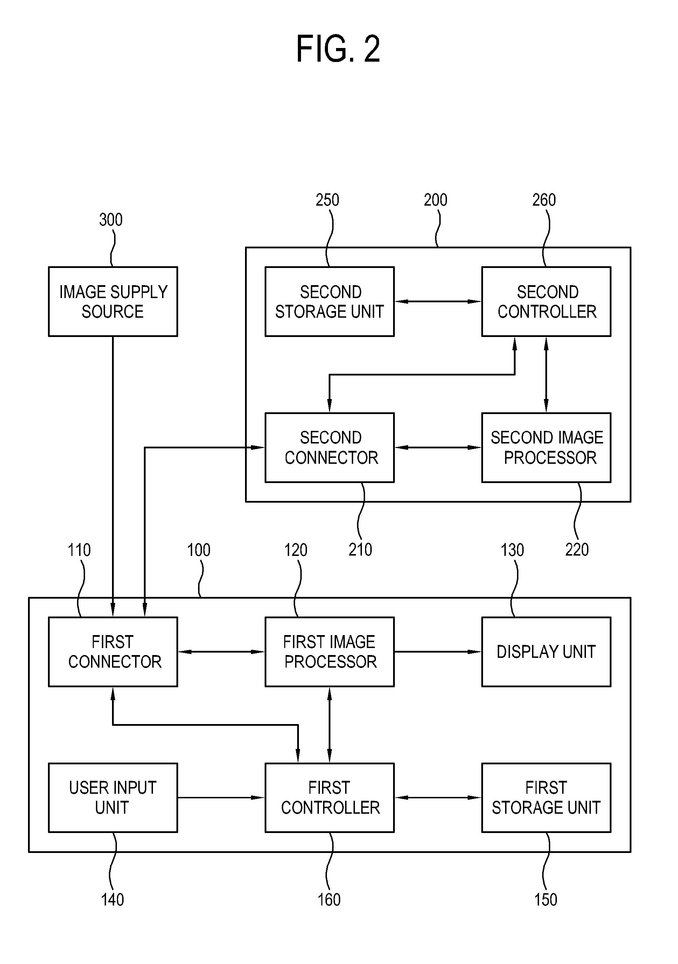

Hereinafter, configurations of the display apparatus 100 and the upgrading apparatus 200 will be described with reference to FIG. 2. FIG. 2 is a block diagram of the display apparatus 100 and the upgrading apparatus 200 which form the display system 1.

As shown therein, the display apparatus 100 includes a first connector 110 which is connected to at least one image supply source 300, a first image processor 120 which processes an image signal that is supplied by the image supply source 300 through the first connector 110, a display unit 130 which displays an image thereon based on an image signal processed by the first image processor 120, a user input unit 140 which outputs a preset command according to a user's manipulation, a first storage unit 150 which stores therein various types of data/information, and a first controller 160 which controls overall operations of the display apparatus 100.

The first connector 110 transmits an image signal from at least one image supply source 300, such as a broadcasting station, etc., to the first image processor 120. The first connector 110 varies depending on a standard of a received image signal or the embodiment type of the display apparatus 100. For example, the first connector 110 may receive signals and/or data according to standards such as high definition multimedia interface (HDMI), universal serial bus (USB) and other types of standards, and may include a plurality of connection terminals (not shown) corresponding to the aforementioned standards. The connection terminals are connected to one or various external apparatuses, such as, for example, the image supply source 300 to perform communication via the first connector 110.

That is, the external apparatus which is connected to the first connector 110 is not limited to the image supply source 300. Any apparatus which may transmit and receive signals and/or data to and/or from the display apparatus 100 through the first connector 110 may be connected to the first connector 110. According to the present exemplary embodiment, the upgrading apparatus 200 may be connected to the first connector 110.

The first image processor 120 performs preset various image processing operations to an image signal transmitted by the first connector 110. The first image processor 120 outputs the processed image signal to the display unit 130, on which an image is displayed based on the processed image signal.

The image processing operation of the first image processor 120 may include one or several different types of operations, e.g., a de-multiplexing operation for dividing a predetermined signal into signals, a decoding operation corresponding to an image format of an image signal, a de-interlacing operation for converting an interlaced image signal into a progressive image signal, a scaling operation for adjusting an image signal into a preset resolution, a noise reduction operation for improving an image quality, a detail enhancement operation, a frame refresh rate conversion operation, etc., but it is understood that the image processing operation is not limited thereto.

The first image processor 120 is realized as an image processing board (not shown) which is formed by mounting various chipsets (not shown), memories (not shown), electronic parts (not shown), wirings (not shown), etc. on a printed circuit board (PCB) (not shown) to perform the image processing operations.

The display unit 130 displays an image thereon based on an image signal output by the first image processor 120. The display unit 130 may be realized as various types of display panels including, for example, liquid crystal, plasma, light-emitting diode (LED), organic light-emitting diode (OLED), surface-conduction electron-emitter, carbon nano-tube, and nano-crystal, but it is understood that the display unit 130 is not limited thereto.

The display unit 130 may further include additional elements depending on its embodiment type. For example, if the display unit 130 includes liquid crystal, the display unit 130 may also include a liquid crystal display (LCD) panel (not shown), a backlight unit (not shown) to emit light to the LCD panel, and a panel driving substrate (not shown) to drive the panel.

The user input unit 140 transmits various types of various control commands and/or various types of information to the first controller 160 according to a user's manipulation and input. According to exemplary aspects, the user input unit 140 may be realized as a menu key and an input panel installed in an external side of the display apparatus 100, or as a remote controller which is separated from the display apparatus 100.

Alternatively, the user input unit 140 may be integrally formed in the display unit 130. That is, if the display unit 130 is a touch screen, a user may transmit a preset command to the first controller 160 through an input menu (not shown) displayed on the display unit 130.

The first storage unit 150 stores therein various types of data by a control of the first controller 160. The first storage unit 150 may include a non-volatile memory such as a flash memory or a hard disc drive. The first storage unit 150 is accessed by the first controller 160, and data stored therein may be read and/or recorded and/or modified and/or deleted and/or updated by the first controller 160.

The data which are stored in the first storage unit 150 include, for example, an operating system (OS) for driving the display apparatus 100 and other various applications which are executed on the OS, and image data and additional data.

The first controller 160 performs control operations for various elements of the display apparatus 100. For example, the first controller 160 controls the first image processor 120 to process an image signal, transmits and receives signals and/or information and/or data through the first connector 110, and performs a control operation corresponding to a command from the user input unit 140 to thereby control overall operations of the display apparatus 100.

According to the foregoing configuration, the display apparatus 100 may be upgraded due to various factors, including, for example, the development of technology as usage time elapses. For example, the display apparatus 100 may be upgraded to receive an image signal in a new format which was not suggested when the display apparatus 100 was manufactured, or receive an image signal with a resolution which is higher than the level supported by the display apparatus 100 to meet a trend requiring a high quality image, or reduce a system load to the display apparatus 100. It is understood that the display apparatus 100 may be upgraded for many other reasons as well.

Upgrading the display apparatus 100 may be considered from the perspectives of both hardware and software. According to the present exemplary embodiment, the upgrading apparatus 200 which upgrades the display apparatus 100 is connected to the first connector 110, and upgrades at least one of existing hardware and software of the display apparatus 100.

The upgrading apparatus 200 includes hardware and/or software corresponding to at least a part of hardware and/or software resources of the display apparatus 100. The hardware and/or software of the upgrading apparatus 200 may perform an improved function with respect to at least a part of the resources of the display apparatus 100. Upon connection to the display apparatus 100, the upgrading apparatus 200 replaces at least a part of existing resources of the display apparatus 100 to thereby improve a quality of an image displayed by the display apparatus 100.

Hereinafter, a configuration of the upgrading apparatus 200 will be described.

The upgrading apparatus 200 includes a second connector 210 which is connected to the first connector 110 of the display apparatus 100, a second image processor 220 which performs at least a part of the image processing operations of the first image processor 120, a second storage unit 250 which stores therein unlimited data and/or information, and a second controller 260 which controls overall operations of the upgrading apparatus 200.

The second connector 210 is connected to the first connector 110 for communication between the upgrading apparatus 200 and the display apparatus 100. The second connector 210 is provided in compliance with standards corresponding to the first connector 110 to be connected to the first connector 110, and may be connected to at least one of a plurality of connection terminals (not shown) of the first connector 110.

For example, among the plurality of connection terminals of the first connector 110, the second connector 210 may be connected to an HDMI terminal (not shown) to transmit an image signal between the display apparatus 100 and the upgrading apparatus 200, and to a USB terminal (not shown) to transmit data and power. However, this is an example, and the connection method of the first and second connectors 110 and 210 is not limited to the foregoing example, and may vary in many different ways, including the number and types of the terminals.

With respect to a first process which is performed by the first image processor 120 of the display apparatus 100, the second image processor 220 may perform a second process corresponding to the first process. The first and second processes are named for distinction purposes only, and may include a single unit process or a plurality of unit processes. The second process is an improved process in functionality compared to the first process. This improved process may be realized by an improvement of hardware, such as chipsets, and/or an improvement of software, such as algorithms and/or execution codes and/or programs.

Upon a connection of the upgrading apparatus 200 to the display apparatus 100, the second image processor 220 performs the second process on behalf of the first process according to a control of the first controller 160 and/or the second controller 260. As the second process, which is improved in functionality compared to the first process, is performed, the entire image processing operation may be improved. This will be described in detail in an exemplary embodiment below.

The second storage unit 250 stores various types of data therein. According to exemplary aspects, the second storage unit 250 is realized as a non-volatile memory such as a flash memory, or a hard disc drive, although is not limited thereto. The second storage unit 250 is accessed by the first controller 160 or the second controller 260, which reads and/or records and/or modifies and/or deletes and/or updates data. In addition, the second controller 260 may also access the first storage unit 150 depending on the embodiment type of the first storage unit 150.

The second controller 260 controls the connection between the display apparatus 100 and the upgrading apparatus 200 to perform the entire image processing operation. The second controller 260 and the first controller 160 may be realized as a central processing unit (CPU), and if the second controller 260 performs an improved function compared to the first controller 160, the second controller 260 may disable the first controller 160 and control the display system 1 as a whole on behalf of the first controller 160. Alternatively, together with the first controller 160, the second controller 260 may control the entire operation of the display system 1.

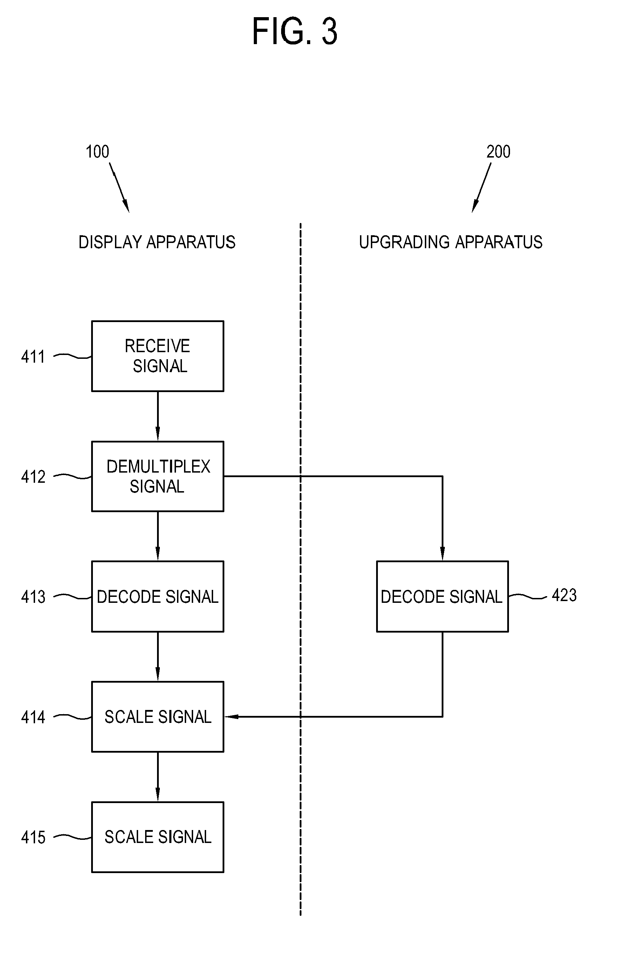

Hereinafter, an exemplary embodiment for upgrading the display apparatus 100 by the upgrading apparatus 200 will be described with reference to FIG. 3. FIG. 3 is a flowchart of a method of upgrading the image processing operation of the display apparatus 100 by the upgrading apparatus 200 in the display system 1 according to the present exemplary embodiment.

As shown therein, upon receiving a predetermined signal, e.g., a broadcasting signal from the image supply source 300, at operation 411, the display apparatus 100 processes the broadcasting signal according to the image processing operations in a preset sequence at operations 412, 413 and 414. The image processing operations 412, 413 and 414 in FIG. 3 are examples intended to briefly explain the present exemplary embodiment and do not represent all of the image processing operations capable of being performed by the display apparatus 100.

The display apparatus 100 performs a de-multiplexing operation for dividing the received broadcasting signal into an image signal, a voice signal and additional data at operation 412. The display apparatus 100 processes the de-multiplexed signals, e.g., decodes the image signal into a preset image format at operation 413. The display apparatus 100 scales the decoded image signal into a predetermined resolution to display an image on the display unit 130 at operation 414, and displays an image based on the scaled image signal at operation 415.

In the foregoing sequence, the upgrading apparatus 200 performs operation 423 corresponding to the decoding operation 413 of the display apparatus 100. The decoding operation 423 of the upgrading apparatus 200 is the same in operation as the decoding operation 413 of the display apparatus 100 but is improved in functionality compared to the decoding operation 413 of the display apparatus 100. Performance of the operation 423 may improve the image processing operation.

For example, at the operation 423, the upgrading apparatus 200 may process an image signal with a resolution that may not be processed at the operation 413, or may process an image signal in a format which may not be processed at the operation 413, or an additional effect which may not apply at the operation 413 may apply to an image signal at the operation 423.

Regarding the sequence of the image processing operations according to the present exemplary embodiment, the decoding operation 423 of the upgrading apparatus 200 is performed on behalf of the decoding operation 413 of the display apparatus 100 following the de-multiplexing operation 412 according to a control of the first controller 160 or the second controller 260. Following the decoding operation 423 of the upgrading apparatus 200, the scaling operation 414 is performed.

In the foregoing sequence, image signals and control signals are transmitted between the display apparatus 100 and the upgrading apparatus 200 according to a control of the first controller 160 or the second controller 260.

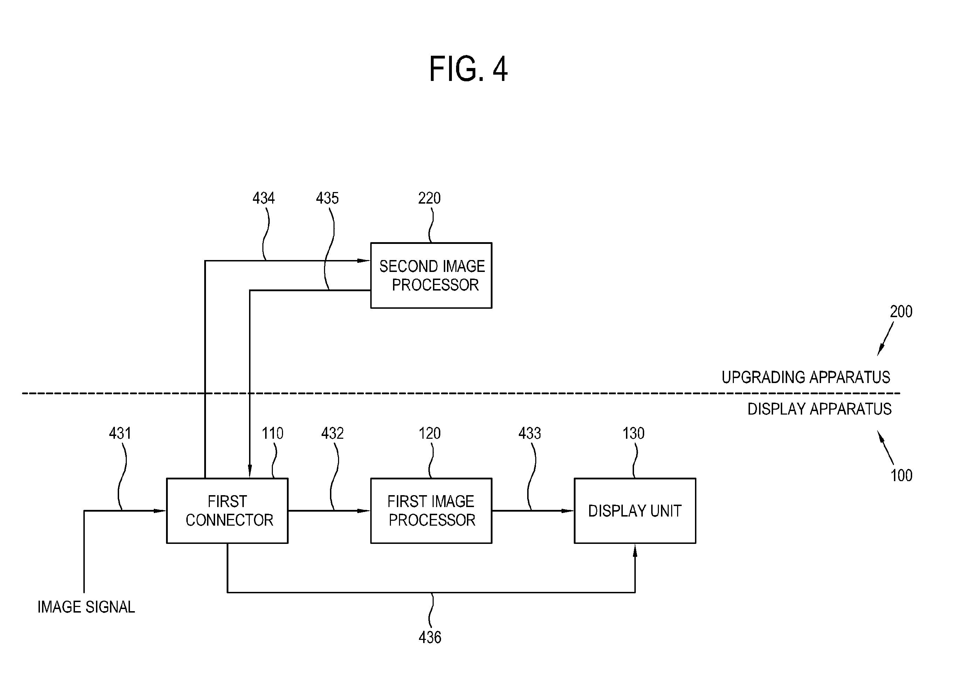

Alternatively, unlike in FIG. 3 in which a part of the image processing operations is replaced, the second image processor 220 of the upgrading apparatus 200 may replace the first image processor 120 of the display apparatus 100. This will be explained with reference to FIG. 4. FIG. 4 is a block diagram of a process of transmitting an image signal to the first connector 110 in the display system 1 according to the present exemplary embodiment.

As shown therein, if the upgrading apparatus 200 is not connected to the display apparatus 100, an image signal is transmitted to the first connector 110 at operation 431, and then to the first image processor 120 at operation 432. The first image processor 120 processes and outputs the image signal to the display unit 130 at operation 433, and the display unit 130 displays an image thereon based on the image signal processed by the first image processor 120.

If the upgrading apparatus 200 is connected to the display apparatus 100, the image signal is transmitted to the first connector 110 at operation 431, and then to the second image processor 220 rather than to the first image processor 120 at operation 434. The second image processor 220 processes the image signal on behalf of the first image processor 120, and the processed image signal is transmitted back to the display apparatus 100 at operation 435.

Then, the image signal bypasses the first image processor 120 and is transmitted to the display unit 130 at operation 436, and the display unit 130 displays an image based on the image signal processed by the second image processor 220. Alternatively, even if the second image processor 220 has processed the image signal, the image signal may still be transmitted by the first connector 110 to the first image processor 120, but in this case, the first image processor 120 may transmit the image signal to the display unit 130 without processing the image signal.

Upon the connection of the upgrading apparatus 200 to the display apparatus 100, the second controller 260 may disable the first controller 160 and control the first and second image processors 120 and 220. Alternatively, if an operating system (OS) stored in the second storage unit 250 is an upgraded version of an OS stored in the first storage unit 150, the OS of the first storage unit 150 may be updated to the OS of the second storage unit 250 to drive the updated OS, or the OS of the second storage unit 250 may be driven on behalf of the OS of the first storage unit 150.

According to the foregoing configuration, the upgrading apparatus 200 according to the present exemplary embodiment may upgrade the display apparatus 100.

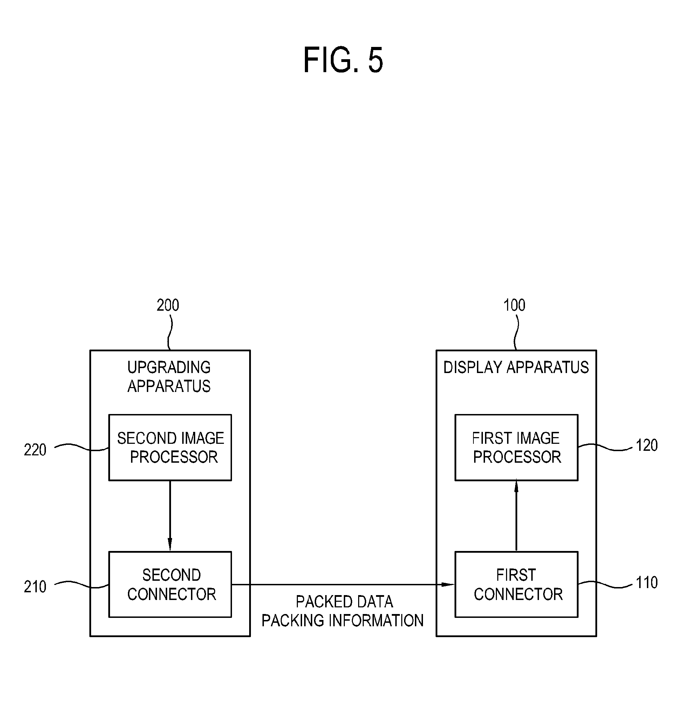

FIG. 5 is a block diagram of some elements of the upgrading apparatus 200 and the display apparatus 100 according to the first exemplary embodiment.

As shown therein, the upgrading apparatus 200 may be realized as an external peripheral device which is connected to the display apparatus 100 in a wired and/or wireless manner, and transmits image data to the display apparatus 100.

The upgrading apparatus 200 may provide various image signals to the display apparatus 100 to provide a function that is not performed by the display apparatus 100. For example, the upgrading apparatus 200 may provide the display apparatus 100 with game images or film images to play games or watch videos, such as movies, in the display apparatus 100 in addition to the broadcasting signal, provide data services relating to the broadcasting signal received and displayed currently, perform various processes which are not performed by the display apparatus 100, or provide a graphic signal that is formed in at least one layer.

The second connector 210 may be implemented as an image interface through which image data may be transmitted to the display apparatus 100, and thus, image data are transmitted according to a predetermined pixel clock within the scope of a preset bandwidth through the second connector 210.

The second image processor 220 generates image data which are transmitted by the upgrading apparatus 200 to the display apparatus 100. According to the present exemplary embodiment, the image data which are generated by the second image processor 220 include at least two different types of image data, e.g., image data and graphic data which may overlap the image data. If a graphic signal is transmitted, the image data may include an alpha value for alpha blending.

For example, in HDMI version 1.3, HDMI supports 24-bit or more (30 to 48 bit) deep color. If 8-bit RGB is input, the upgrading apparatus 200 may transmit an alpha value through the remaining bits. Otherwise, the image data may include game images, data broadcasting signals relating to broadcasting signals, or other information.

According to the present exemplary embodiment, the second image processor 220 combines and packs the at least two different types of image data (hereinafter, also referred to as the "first image data" and the "second image data") according to a predetermined data bandwidth, and generates packing information of the packed data.

Alternatively, an upgrading apparatus 200, to which the present exemplary embodiment does not apply, may transmit a single type of image data through a single HDMI transmitter, and includes a plurality of HDMI transmitters to transmit a plurality of types of image data.

The second image processor 220 according to the present exemplary embodiment packs different image data within the scope of a bandwidth supported by the second connector 210, e.g., a standard bandwidth.

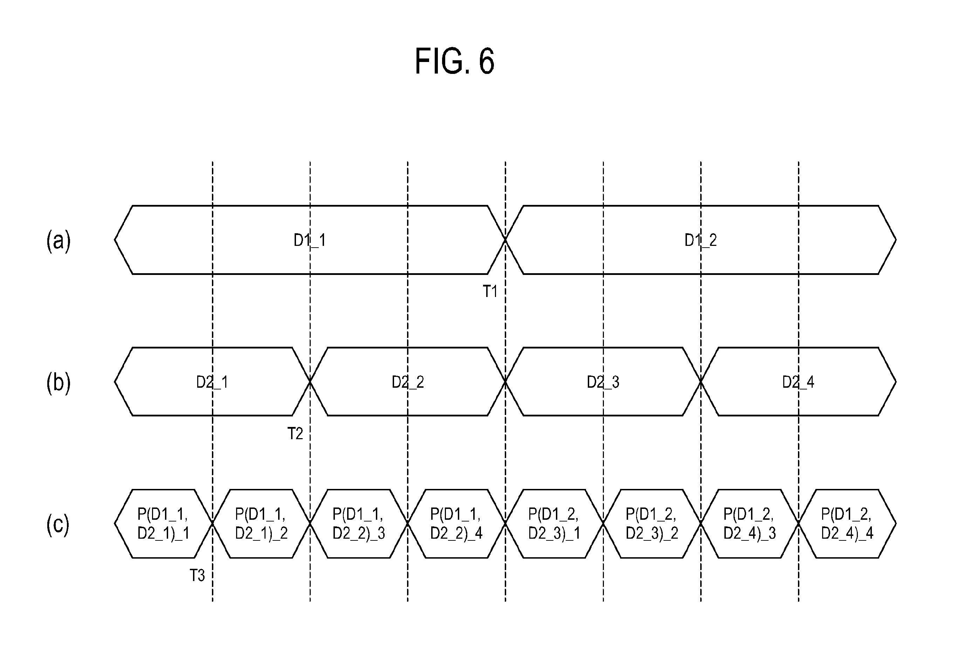

FIG. 6 illustrates a brief data waveform which is provided to explain the image data packing in FIG. 5.

As shown therein, row (a) in FIG. 6 shows the first image data D1_1, D1_2, D1_3 ... and row (b) in FIG. 6 shows the second image data D2_1, D2_2, D2_3, D2_4 .... The first image data correspond to the data transmitted at every T1, i.e. according to a frequency of 1/T1. The second image data correspond to the data transmitted at every T2, i.e., according to a frequency of 1/T2. As shown in FIG. 6, according to an exemplary aspect, T2 is one-half of T1, although is not limited thereto.

If a transmission rate of the first image data per hour, i.e., the sum of the bandwidth of the first image data and the bandwidth of the second image data, is a bandwidth or less of a bandwidth supported by the second connector 210, the second image processor 220 packs the first and second image data as in row (c) to simultaneously transmit the two image data rather than transmitting the two data sequentially or in series. The first image data which should be transmitted at T1 are D1_1, and the second image data which should be transmitted for the same time, i.e., for 2*T2, are D2_1 and D2_2.

The second image processor 220 divides D1_1 into four pieces of image data, divides D2_1 and D2_2 into two pieces of image data each, and packs D1_1, D2_1, and D2_2 as shown in row (c) to generate P(D1_1, D2_1)_1, P(D1_1, D2_1)_2, P(D1_1, D2_2)_1, P(D1_1, D2_2)_2. The packed image data are transmitted to the display apparatus 100 at every T3. T3 corresponds to one-quarter of T1.

That is, the upgrading apparatus 200 divides a plurality of image data having different bandwidths, mixes and combines the divided image data, and separately transmits such data in compliance with the bandwidth supported by the second connector 210.

The second image processor 220 may generate packing information in the same, or a similar, order and method as the order and method used to generate the first and second image data. Such packing information is used to unpack the packed data by the first image processor 120 of the display apparatus 100. The foregoing operation of the second image processor 220 may be controlled by the second controller 260, although is not limited thereto and may alternatively be controlled by another component.

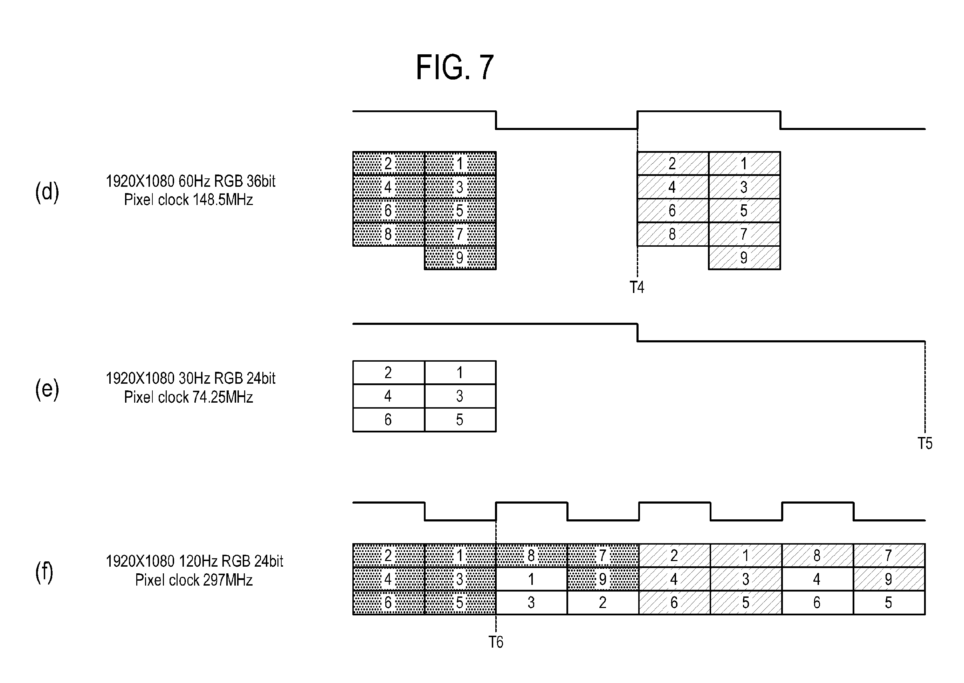

FIG. 7 illustrates image data which are provided to explain the image data packing in FIG. 5. FIG. 7 illustrates an example of substantial image data which are provided to explain the packed image data in more detail.

As shown in row (d), a bandwidth of third image data with 1920*1080 resolution and 60Hz RGB 36 bits is 559.872Mbyte. A pixel clock at which the third image data are transmitted is 148.5MHz. As shown in row (e), fourth image data as another type of image data are 30Hz RGB 24 bits with 1920*1080 resolution and have a bandwidth of 186.624Mbyte. The sum of the bandwidths of the two image data is 746.496Mbyte, which corresponds to the bandwidth in which 120Hz RGB 24-bit data with 1920*1080 may be transmitted.

If the second connector 210 supports a bandwidth of 746.496Mbyte, the second image processor 220 divides and mixes the third and fourth image data and generates 120Hz RGB 24 bits packed data with 1920*1080 resolution, as shown in row (f). The generated packed data are transmitted to the display apparatus 100 through the second connector 210 at a pixel clock of 297MHz at which 746.496Mbyte is transmitted.

In FIG. 7, row (d) corresponds to the third image data, row (e) corresponds to the fourth image data and row (f) corresponds to the packed data.

T4 is a period corresponding to a pixel clock of 148.5MHz, and T5 is twice T4 corresponding to 74.25MHz, one half of the pixel clock of 148.5MHz. If the quantity of the third image data which should be transmitted for T5 is expressed as 18 blocks, the fourth image data correspond to 6 blocks. The second image processor 220 newly packs the third and fourth image data and forms 24 blocks. The packed data which correspond to 24 blocks are transmitted to the display apparatus 100 at a pixel clock of 297MHz for T5.

The first connector 110 receives the packed data of at least two types of image data, and packing information from the upgrading apparatus 200. The packed data may include image data and graphic data which may overlap the image data, as described above.

The first image processor 120 unpacks the packed data transmitted by the upgrading apparatus 200, according to the packing information. That is, the first image processor 120 unpacks the packed data into the first and second image data, achieving the effect that the first and second image data have been transmitted, respectively. The unpacked first and second image data are output to the display unit 130 to display an image. The foregoing operation of the first image processor 120 may be controlled by the first controller 160, but is not limited thereto and may be controlled by another component as well.

The first image processor 120 may synthesize an inherent graphic signal and the image data transmitted by the upgrading apparatus 200. For example, the first image processor 120 may synthesize the received image data, and graphic data such as channel information of a channel number and program title, subtitles, teletext, etc. The graphic data may be formed in a plurality of layers in the image data, and images may overlap each other depending on transparency, and may be displayed in picture-in-picture (PIP) format or in various other types of formats.

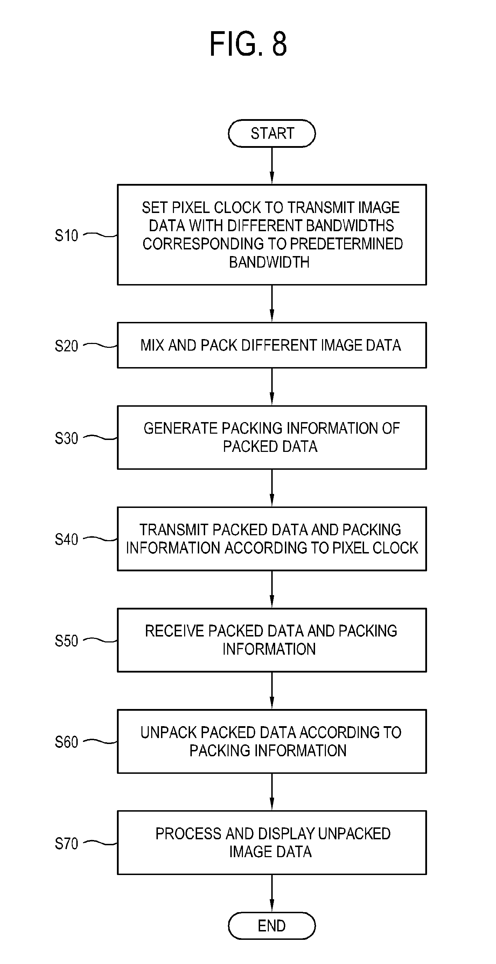

FIG. 8 is a control block diagram of a control method of the upgrading apparatus 200 and the display apparatus 100 in FIG. 5.

As shown therein, the upgrading apparatus 200 sets a pixel clock to transmit image data with different data bandwidths corresponding to a preset data bandwidth. As shown in FIG. 7, the upgrading apparatus 200 sets 297MHz as a new pixel clock to transmit 746.496Mbyte at operation S10.

The upgrading apparatus 200 mixes and packs the different image data as shown in row (c) in FIG. 6 or row (f) in FIG. 7 at operation S20. Three or more types of image data may be packed if such data satisfy the data bandwidth.

The upgrading apparatus 200 generates packing information regarding the packing method of the different image data at operation S30. The packing information may be generated after the image data are packed, but typically, the packing information is generated prior to or in the course of generating the packed data.

If the packed data and packing information are generated, the upgrading apparatus 200 transmits the packed data and packing information to the display apparatus 100 at a preset pixel clock at operation S40.

The display apparatus 100 receives the packed data and packing information at operation S50.

The display apparatus 100 unpacks the received packed data according to the packing information at operation S60. The unpacked image data correspond to each piece of data before being packed by the upgrading apparatus 200.

The display apparatus 100 processes the unpacked image data and displays an image based on the processed image data at operation S70.

According to a second exemplary embodiment, a process where the upgrading apparatus 200 converts an image signal (hereinafter, also referred to as a "first image signal") into a transmissible image signal (hereinafter, also referred to as a "second image signal"), and transmits the converted second image signal to the display apparatus 100, will be described. The display apparatus 100 converts the transmitted second image signal into the first image signal, and displays an image based on the converted first image signal.

The first image signal includes a plurality of channels. The upgrading apparatus 200 assigns data of at least one of the plurality of channels (hereinafter, also referred to as a "first channel") to another channel (hereinafter, also referred to as a "second channel") to thereby convert the first image signal into the second image signal. Even if the number of channels supported by the transmission standard of an image signal is limited, the number of channels of the image signal can be reduced and the image signal may be transmitted in its entirety according to the transmission standard allowing a smaller number of channels.

Returning to FIG. 2, the second image processor 220 assigns data of a first channel of the plurality of channels of the first image signal to at least one second channel to convert the first image signal into the second image signal. The number of channels of the first image signal is larger than the number of channels of the second image signal. The second image processor 220 reduces the number of the channels of the first image signal to the number of the channels of the second image signal. The data of the first channel of the first image signal is assigned to a second channel of the first image signal, thereby reducing the number of channels of the first image signal. That is, the second image signal includes the second channel including data of the first channel of the first image signal.

The second controller 260 transmits the second image signal, which has been converted by the second image processor 220, to the display apparatus 100. The second image signal may be transmitted according to HDMI transmission standards, but is not limited thereto.

The first connector 110 receives the second image signal from the upgrading apparatus 200. The first connector 110 may receive the second image signal according to the HDMI transmission standard, but is not limited thereto.

The first image processor 120 converts the second image signal, which is transmitted through the first connector 110, into the first image signal. That is, the first image processor 120 assigns data originally included in the at least one first channel of the first image signal which is included in the at least one second channel of the channels of the second image signal to an additional channel to thereby convert the second image signal into the first image signal. The display unit 130 displays an image thereon based on the converted first image signal.

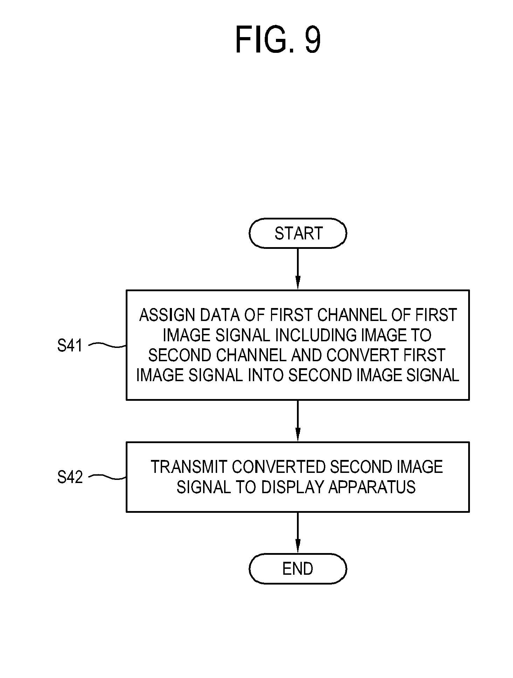

FIG. 9 is a flowchart of a control method of the upgrading apparatus 200 according to the exemplary embodiment.

As shown therein, the upgrading apparatus 200 assigns data of at least one first channel of the plurality of channels of the first image signal to at least one second channel to convert the first image signal into the second image signal at operation S41. The upgrading apparatus 200 transmits the converted second image signal to the display apparatus 100 at operation S42.

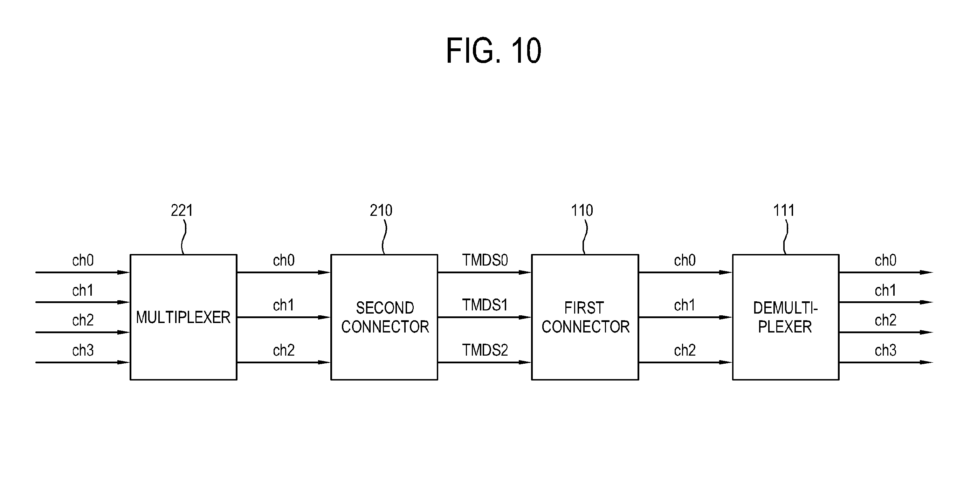

FIG. 10 is a block diagram of conversion and transmission processes of the first and second signals.

As shown therein, according to the present exemplary embodiment, the first image signal has four channels Ch0 to Ch3, and the second image signal has three channels Ch0 to Ch2. The first image signal of the four channels Ch0 to Ch3 is converted into the second image signal of the three channels Ch0 to Ch2 by a multiplexer 221.

The multiplexer 221 is included in the second image processor 220 and a de-multiplexer 111 is included in the first image processor 120.

As data of the first channel Ch3 of the four channels Ch0 to Ch3 of the first image signal are assigned to one of the remaining second channels Ch0 to Ch2, the first image signal of the four channels Ch0 to Ch3 is converted into the second image signal of the three channels Ch0 to Ch2. It is understood that channels other than Ch3 may be assigned to the remaining second channels instead of, or in addition to, Ch3.

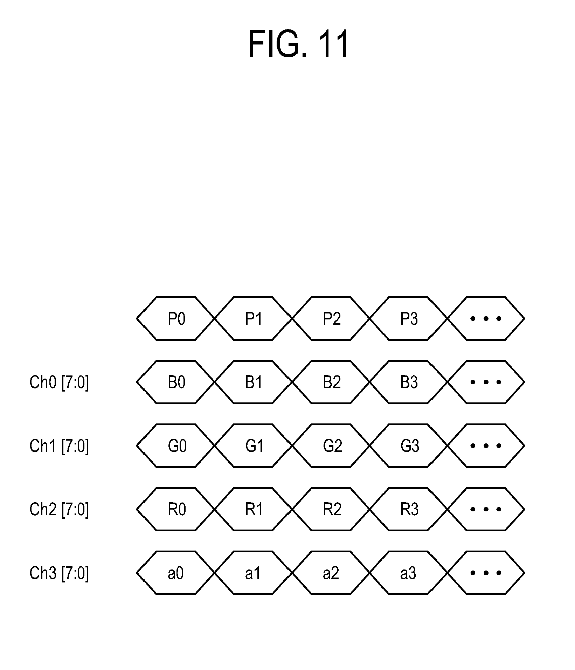

FIG. 11 illustrates an example of a channel configuration of the first image signal.

As shown therein, the first image signal according to the present exemplary embodiment may have 32-bit aRGB (or RGBA). That is, the first image signal includes three second channels Ch0 to Ch2 corresponding to each of B (B0, B1,...), G(G0, G1,...) and R(R0, R1,...), and a single first channel Ch3 corresponding to alpha values (a0, a1,...). Each channel includes 8-bit data [7:0] per pixel (P0, P1, ...).

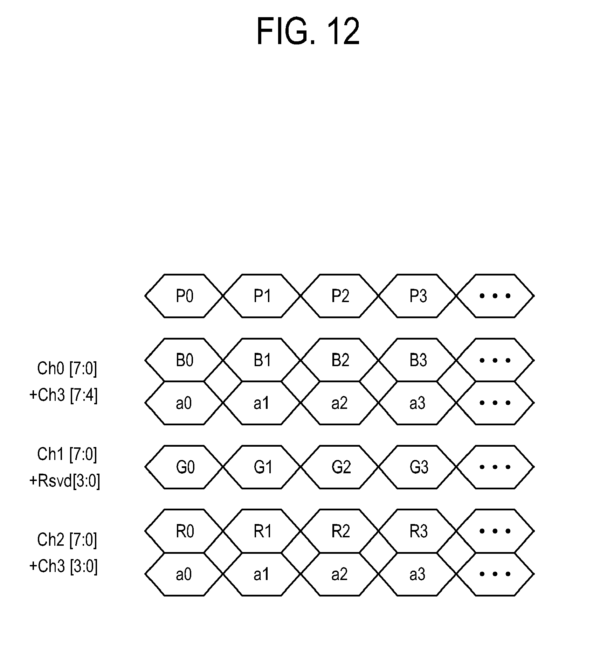

FIG. 12 illustrates an example of a channel configuration of the second image signal which is converted from the first image signal.

As shown therein, the second image signal includes three second channels Ch0 to Ch2. Each channel has 12-bit data per pixel (P0, P1,...).

The alpha value (a0, a1,...) of the first channel Ch3 of the first image signal is assigned to the two second channels Ch0 and Ch2 corresponding to B(B0, B1,...) and R(R0, R1,...) among the three second channels Ch0 to Ch2.

More specifically, the second channel Ch0 is assigned with 8-bit B (B0, B1,...) color image data [7:0] per pixel (P0, P1, ...) and subordinate 4-bit data [7:4] of the alpha value (a0, a1,...). The second channel Ch2 is assigned with 8-bit R (R0, R1, ...) color image data [7:0] per pixel (P0, P1,...) and senior 4-bit data [3:0] of the alpha value (a0, a1,...). The second channel Ch1 may be assigned with 8-bit G(G0, G1, ...) color image data [7:0] per pixel P0, P1,.. and 4-bit reserve data [3:0].

Returning to FIG. 9, the upgrading apparatus 200 transmits the converted second image signal to the display apparatus 100 at operation S42. For example, as shown in FIG. 5, the converted second image signal of the three channels Ch0 to Ch2 is transmitted according to the HDMI transmission standards TMDS0 to TMDS2 by the second connector 210 of the upgrading apparatus 200. It is understood that other transmission standards may also be used.

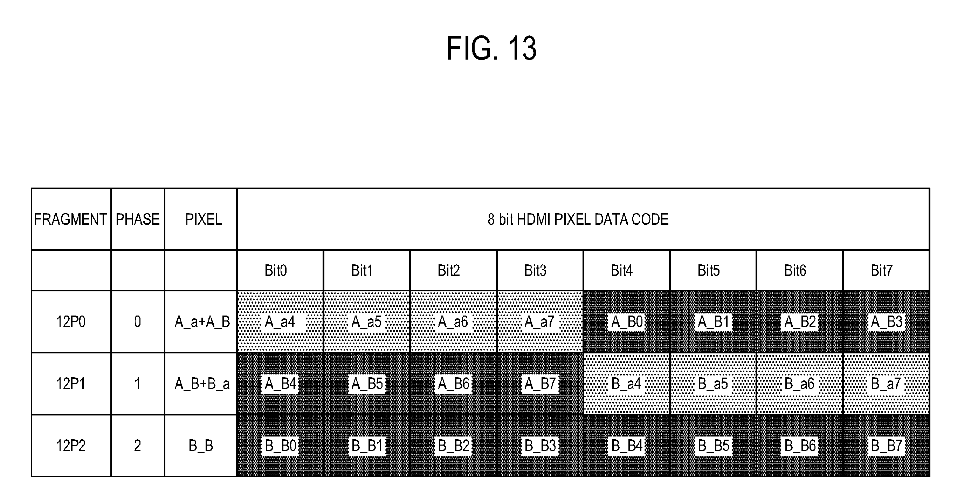

The second image signal may be transmitted in a 36-bit mode of HDMI. FIG. 13 illustrates a table showing a pixel data configuration of the second channel Ch0 as one of the channels of the second image signal.

In the table in FIG. 13, Bit0 to Bit7 represent 8-bit HDMI pixel data codes, respectively. 12P0 to 12P2 represent three pixel fragments. A_a4 to A_a7 (4 bits) represent an alpha value of a pixel A, A_B0 to A_B7 (8 bits) represent a color value of the pixel A, B_a4 to B_a7 (4 bits) represent an alpha value of a pixel B, and B_B0 to B_B7 (8 bits) represent a color value of the pixel B.

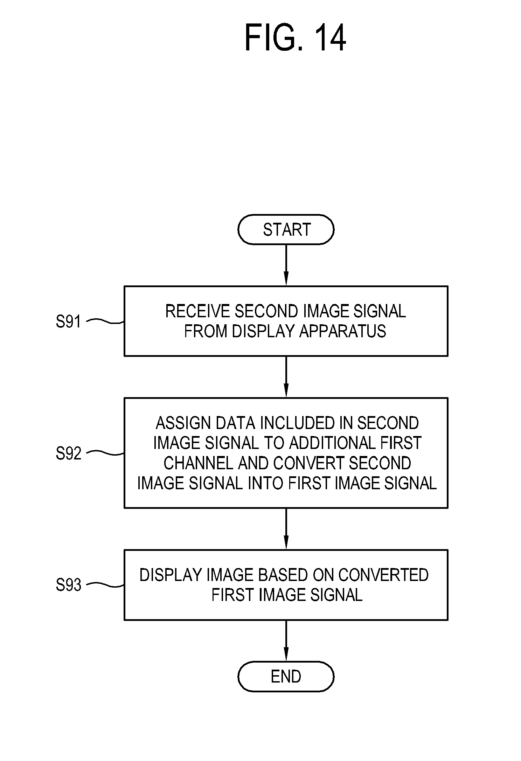

FIG. 14 is a flowchart of a control method of the display apparatus 100.

As shown therein, the display apparatus 100 receives the second image signal from the upgrading apparatus 200 at operation S91. Returning to FIG. 10, the second image signal which is transmitted, for example, according to the HDMI transmission standard TMDS0 to TMDS2 is received by the first connector 110 of the display apparatus 100.

The display apparatus 100 assigns data of the second image signal to the additional first channel to convert the second image signal into the first image signal at operation S92. As shown in FIG. 10, the second image signal of three channels which is received by the first connector 110 is converted into the first image signal of the four channels Ch0 to Ch3 by the de-multiplexer 111.

The de-multiplexer 111 extracts subordinate 4-bit data [7:4] of the alpha value (a0, a1,...) of the second channel Ch0 corresponding to B (B0, B1, ...) color and senior 4-bit data [3:0] of the alpha value (a0, a1,...) of the second channel corresponding to R (R0, R1, ...) color by referring to the pixel configuration in FIG. 13 and reconfigures the 8-bit first channel Ch3, as shown in FIG. 11. The data of the remaining three second channels Ch0 to Ch2 are reconfigured as 8-bit data corresponding to B, G and R colors. Thus, the first image signal of the four channels Ch0 to Ch3 may be obtained again.

The display apparatus 100 displays an image based on the converted first image signal at operation S93. The first image signal may include an alpha value as well as image data of each color. The image data and alpha value of the first image signal may correspond to a graphic image such as a GUI. The graphic image may overlap a video image processed by the display apparatus 100. The alpha value of the first image signal may be used to display the overlapped video image and the graphic image.

According to the above-described exemplary embodiments, data of the plurality of channels may be transmitted as is by using existing transmission standards with high quality and security while using a limited number of channels.

It will be appreciated by those skilled in the art that changes may be made to the above-described exemplary embodiments without departing from the principles and spirit of the invention. For example, in the foregoing exemplary embodiment, the first image signal has more channels than the second image signal does, but other embodiments are not limited thereto. Alternatively, the first image signal may have fewer channels than the second image signal does, or have the same channels as the second image signal does. That is, embodiments apply to the case where the first image signal is converted into the second image signal including channels by combining at least a part of data of two or more channels of the first image signal.

Hereinafter, a third exemplary embodiment will be described.

According to the third exemplary embodiment, internal elements of the display apparatus 100 and the upgrading apparatus 200 transmit digital signals therebetween. Transmission of the digital signals may be performed within the display apparatus 100, the upgrading apparatus 200 or between the display apparatus 100 and the upgrading apparatus 200, but are not limited thereto, and it is understood that transmission of the digital signals may also be performed in various other ways.

For example, a digital signal may be transmitted between the first connector 110 and the first image processor 120, between the first image processor 120 and the display unit 130, or between two image processing modules (not shown) of the first image processor 120 in the display apparatus 100.

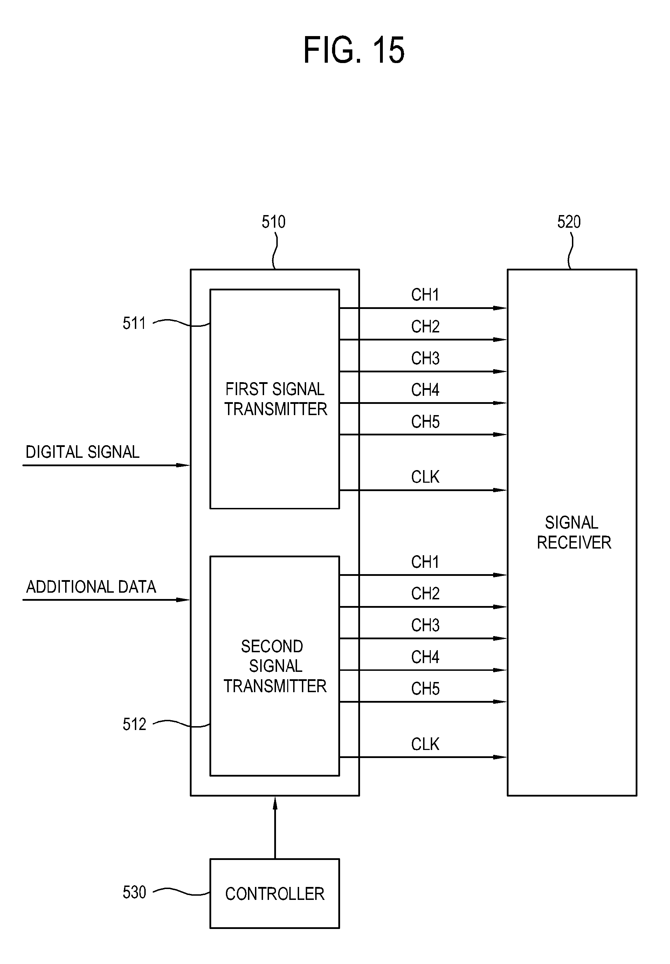

Hereinafter, a transmission method of transmitting a digital signal between the signal transmitter 510 and the signal receiver 520 will be described with reference to FIG. 15. FIG. 15 is a block diagram of a signal transmission between the signal transmitter 510 and the signal receiver 520 in the display system 1.

As shown therein, a digital signal is received by the signal transmitter 510 and transmitted to the signal receiver 520, and the controller 530 controls the transmission of the digital signal by the signal transmitter 510 to the signal receiver 520.

The configuration of the signal transmitter 510 and the signal receiver 520 may apply to any configuration in which a signal is transmitted among those of the display apparatus 100 and the upgrading apparatus 200, and thus is not limited to the configuration shown in FIG. 15. The controller 530 may employ the configuration of the first controller 160 or the second controller 260 in FIG. 2, or may alternatively employ another configuration.

According to the present exemplary embodiment, a digital signal is transmitted according to low voltage differential signaling (LVDS) standards.

The signal transmitter 510 includes a plurality of signal transmitters 511 and 512, i.e. a first signal transmitter 511 and a second signal transmitter 512 according to the present exemplary embodiment. The first and second signal transmitters 511 and 512 may transmit a digital signal in a preset frequency bandwidth, and may, for example, transmit 30Hz image digital signals, respectively.

According to the present exemplary embodiment, the number of the signal transmitters 511 and 512 and the frequency bandwidth in which the signal transmitters 511 and 512 may transmit signals have been explained to clarify aspects of the present embodiment and do not limit the embodiment.

If a 60Hz image digital signal according to full HD standards is transmitted to the signal transmitter 510, the controller 530 divides the digital signal into 30Hz digital signals, respectively, and controls the first and second signal transmitters 511 and 512 to transmit the divided digital signals, respectively.

The 30Hz digital signals which are transmitted to the signal receiver 520 by the first and second signal transmitters 511 and 512 are merged to the 60Hz digital signal again.

The first signal transmitter 511 includes a clock transmission channel CLK which transmits a clock signal, and a plurality of data transmission channels CH1, CH2, CH3, CH4 and CH5 which transmit data with preset bits according to the clock signal. The number of the data transmission channels CH1, CH2, CH3, CH4 and CH5 is an example only. If the number of the data transmission channels CH1, CH2, CH3, CH4 and CH5 increases, the number of data bits which is transmitted per clock increases accordingly. It is understood that the number of the data transmission channels may be greater than or less than five.

In an embodiment, the second signal transmitter 512 has the same configuration as the first signal transmitter 511. That is, the second signal transmitter 512 transmits a clock transmission channel CLK and a plurality of data transmission channels CH1, CH2, CH3, CH4 and CH5, and together with the first signal transmitter 511, transmits the digital signals, which have been divided into 30Hz digital signals, respectively, to the signal receiver 520.

The digital signal includes an image signal including image data, and a sync signal which corresponds to the image signal. The display apparatus 100 and the upgrading apparatus 200 process an image signal and display an image corresponding to the sync signal.

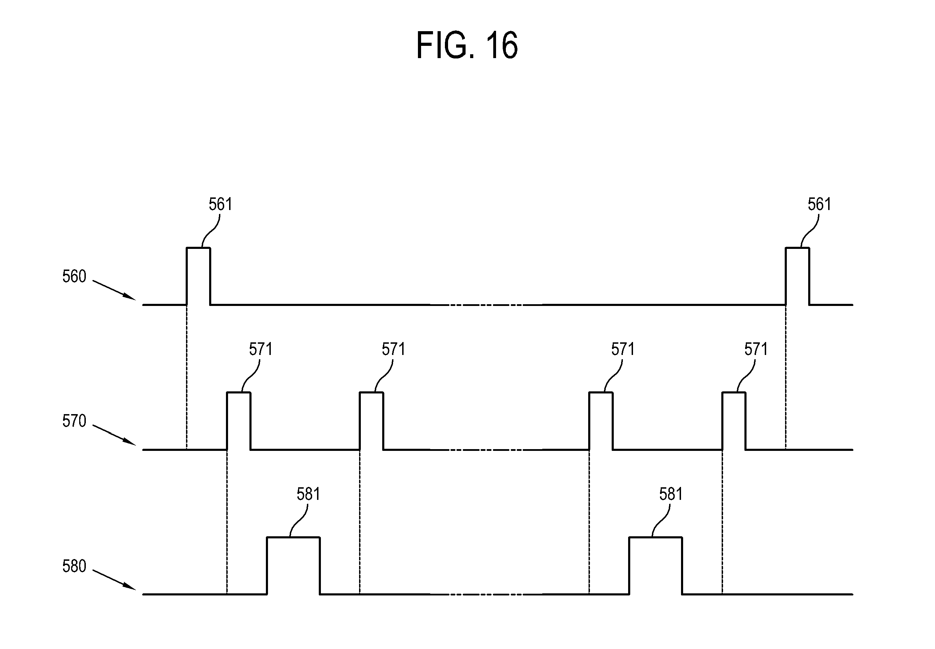

FIG. 16 illustrates an example of a sync signal included in a digital signal.

As shown therein, the sync signal includes a vertical sync signal 560, a horizontal sync signal 570 and a data enable signal 580.

Based on a single image frame, the vertical sync signal 560 is formed so that an image signal corresponding to a single image frame is temporally arranged between two temporally adjacent syncs 561. That is, a single image frame is displayed during the time between the two adjacent syncs 561 in the vertical sync signal 560.

A single image frame is formed by vertically arranging a plurality of image scan lines, each of which is processed to be displayed according to the horizontal sync signal 570.

The syncs 571 of the horizontal sync signal 570 are arranged between two adjacent syncs 561 in the vertical sync signal 560, and the image scan lines are processed to be displayed according to the syncs 571.

Each image scan line is displayed during an active period 581 of the data enable signal 580. The active period 581 is arranged between the two adjacent syncs 571 of the vertical sync signal 570, and an image signal corresponding to the image scan lines is displayed during the active interval 581 and as a result, a single image frame is displayed. That is, the data enable signal 580 is a duty signal which specifies a time interval for processing an image signal.

To display an image based on an image signal, the sync signal should be configured as above. Accordingly, the controller 530 controls the signal transmitter 510 to transmit the digital signal to the signal receiver 520, together with the image signal and the sync signal.

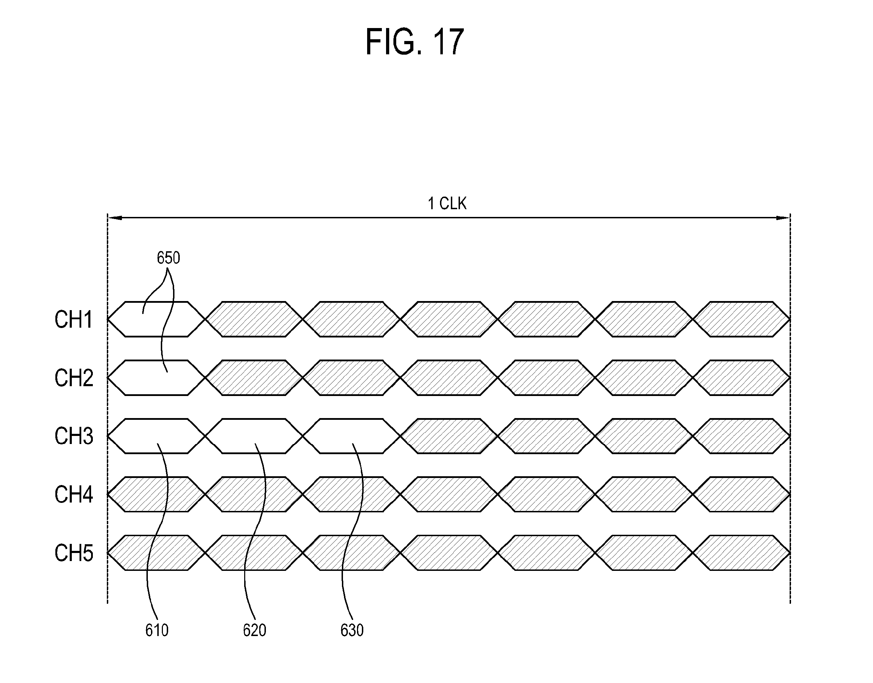

Hereinafter, an example of transmitting a digital signal by the first signal transmitter 511 through the plurality of data transmission channels CH1, CH2, CH3, CH4 and CH5 will be described with reference to FIG. 17. FIG. 17 illustrates an example of a data bit configuration of a digital signal transmitted per clock.

As shown therein, the controller 530 distributes image signal data and sync signal data of a digital signal to the plurality of data transmission channels CH1, CH2, CH3, CH4 and CH5 of the first signal transmitter 511 per clock. The distribution order of the data for the data transmission channels CH1, CH2, CH3, CH4 and CH5 may be determined corresponding to preset standards.

The data transmission channels CH1, CH2, CH3, CH4 and CH5 in compliance with LVDS standards may transmit 7-bit data per clock. That is, the first signal transmitter 511 which has five data transmission channels CH1, CH2, CH3, CH4 and CH5 may transmit 35-bit data per clock. The above-described number of the data transmission channels CH1, CH2, CH3, CH4 and CH5 and the above-described number of bits which may be transmitted by the CH1, CH2, CH3, CH4 and CH5 are examples, and is it understood that other embodiments are not limited to these examples.

The controller 530 collects 10 bits each from R, G and B of an image signal including the RGB data and distributes the 30-bit image data per clock to the data transmission channels CH1, CH2, CH3, CH4 and CH5. The hatched data bits in FIG. 17 refer to the data bits corresponding to the image data of the image signal.

The controller 530 distributes 1-bit data corresponding to the vertical sync signal, horizontal sync signal and data enable signal of the sync signal to the data bits of 35 bits per clock, which correspond to first three data bits 610, 620 and 630 of the data transmission channel CH3.

There may be additional data which are transmitted by the first signal transmitter 511 to the signal receiver 520 in addition to the image signal and the sync signal. The additional data refer to data which are different from image data or sync signal data, and are not limited to any particular type of information/data. The additional data may vary depending on an internal circuit configuration of the display apparatus 100 or the upgrading apparatus 200, or functions and services thereof.

If there are the additional data, the controller 530 may distribute the additional data to the remaining two bits 650, which have not been distributed to the image signal and the sync signal among the 35 bits per clock. It is understood that the additional data may alternatively be distributed to other bits as well.

Thus, the first signal transmitter 511 may transmit to the signal receiver 520 30-bit image data, 3-bit sync signal data and 2-bit additional data per clock through the five data transmission channels CH1, CH2, CH3, CH4 and CH5.

According to an embodiment, the second signal transmitter 512 has the same signal transmission configuration as the first signal transmitter 511. If the first and second signal transmitters 511 and 512 jointly transmit a digital signal, the digital signal is transmitted as follows.

The first signal and second signal transmitters 511 and 512 have 10 data transmission channels CH1, CH2, CH3, CH4 and CH5 in total, and thus may transmit to the signal receiver 520 60-bit image signal data, 6-bit sync signal data and 4-bit additional data per clock.

Depending on the usage environment or services of the display apparatus 100 and the upgrading apparatus 200, the additional data which is transmitted per clock may exceed 4 bits. In this case, an additional channel may be provided between the signal transmitter 510 and the signal receiver 520 to transmit the additional data, but this may cause complex hardware.

According to the present exemplary embodiment, 4-bit or more additional data may be transmitted per clock by the following method without installation of additional hardware.

Among the data which are transmitted through the 10 data transmission channels CH1, CH2, CH3, CH4 and CH5 of the first and second signal transmitters 511 and 512, 6-bit sync signal data will be considered in the following exemplary description.

The image signal data which are transmitted through the first and second signal transmitters 511 and 512, respectively, are image signals which are divided according to a frequency bandwidth from a single digital signal rather than irrelevant image signals. Therefore, the divided image signals are processed and displayed according to the same sync signal.

That is, the divided image signals which are transmitted by the first and second signal transmitters 511 and 512, respectively, are merged by the signal receiver 520, and the merged image signal is processed according to the sync signal.

Thus, the first and second signal transmitters 511 and 512 transmit the same sync signal data, and therefore, 3 bits are repetitive data from the 6-bit sync signal data per clock.

The controller 530 divides the image signal corresponding to the first and second signal transmitters 511 and 512, respectively. The controller 530 transmits a part of the divided image signals through the first signal transmitter 511 together with the sync signal data, and transmits the remaining image signals through the second signal transmitter 512 together with the additional data rather than with the sync signal data.

That is, the controller 530 transmits the sync signal data through the first signal transmitter 511 only and transmits the additional data through the second signal transmitter 512.

The 60-bit image signal data, 3-bit sync signal data and 7-bit additional data per clock may be transmitted by the first and second signal transmitters 511 and 512 to the signal receiver 520 through a total of 10 data transmission channels CH1, CH2, CH3, CH4 and CH5. In other words, since the 3-bit sync signal data is only transmitted by the first signal transmitter 511, the 3 bits which would have been used to transmit sync signal data by the second signal transmitter 512 can instead be used to transmit 3 bits of additional data.

According to the present exemplary embodiment, 3-bit additional data may be further transmitted per clock through the first and second signal transmitters 511 and 512 compared to the case where the present exemplary embodiment does not apply.

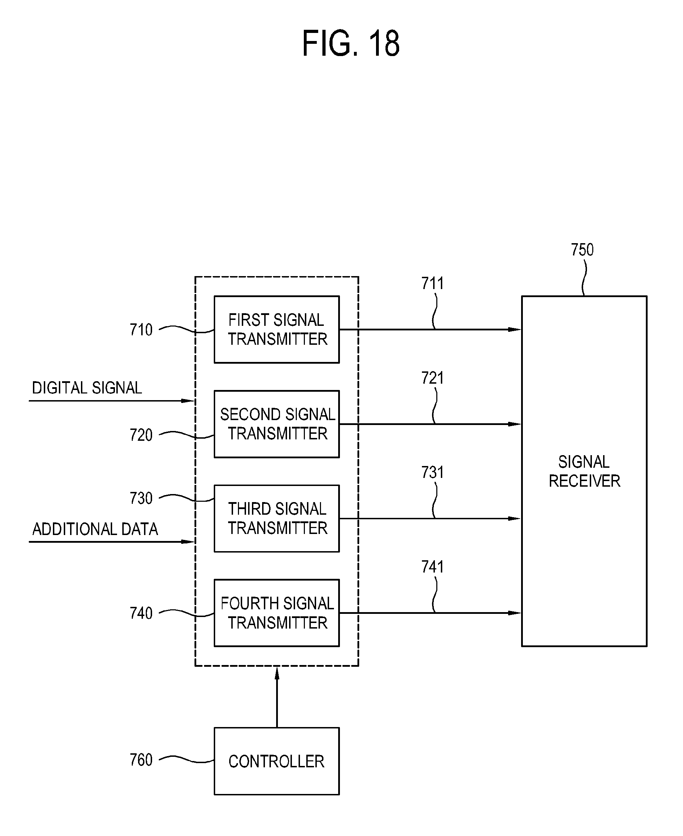

The exemplary embodiment may also apply when there are three or more signal transmitters 511 and 512. FIG. 18 is a block diagram of transmitting a digital signal when four signal transmitters 710, 720, 730 and 740 are provided.

As shown therein, the signal transmitters 710, 720, 730 and 740 consist of four units, each of which may employ the configuration of the signal transmitters 511 and 512 in FIG. 15. Thus, a detailed description of the signal transmitters 710, 720, 730 and 740 will be omitted.

The configuration of the signal receiver 750 and the controller 760 may also employ the configuration of the signal receiver 520 and the controller 530 in FIG. 5, respectively, and thus, a detailed description of the signal receiver 750 and controller 760 will be omitted.

For example, if a digital signal including full HD 120Hz image signal data is received, the controller 760 distributes 30Hz each of the digital signal to the signal transmitters 710, 720, 730 and 740.

The controller 760 transmits image signal data and sync signal data through the first signal transmitter 710. Accordingly, the first signal transmitter 710 transmits 30-bit image signal data, 3-bit sync signal data and 2-bit additional data per clock to the signal receiver 750 at operation 711.

Since the sync signal corresponding to an image signal is distributed to the first signal transmitter 710, the sync signal data are not needed to be repetitively distributed through the signal transmitters 720, 730 and 740.

The controller 760 distributes the image signal data and the additional data to the second signal transmitter 720, the third signal transmitter 730 and the fourth signal transmitter 740, without distributing the sync signal data to the second signal transmitter 720, the third signal transmitter 730 or the fourth signal transmitter 740. Accordingly, the second signal transmitter 720, the third signal transmitter 730 and the fourth signal transmitter 740 transmit the 30-bit image signal data and 5-bit additional data per clock to the signal receiver 750 at operations 721, 731 and 741, respectively.

That is, the 120-bit image signal data, 3-bit sync signal data and 17-bit additional data are transmitted per clock by the signal transmitters 710, 720, 730 and 740.

In the case where the present exemplary embodiment does not apply, 120-bit image signal data, 12-bit sync signal data and 8-bit additional data may be transmitted per clock by the signal transmitters 710, 720, 730 and 740. In the present exemplary embodiment, however, 9-bit additional data may be further transmitted per clock.

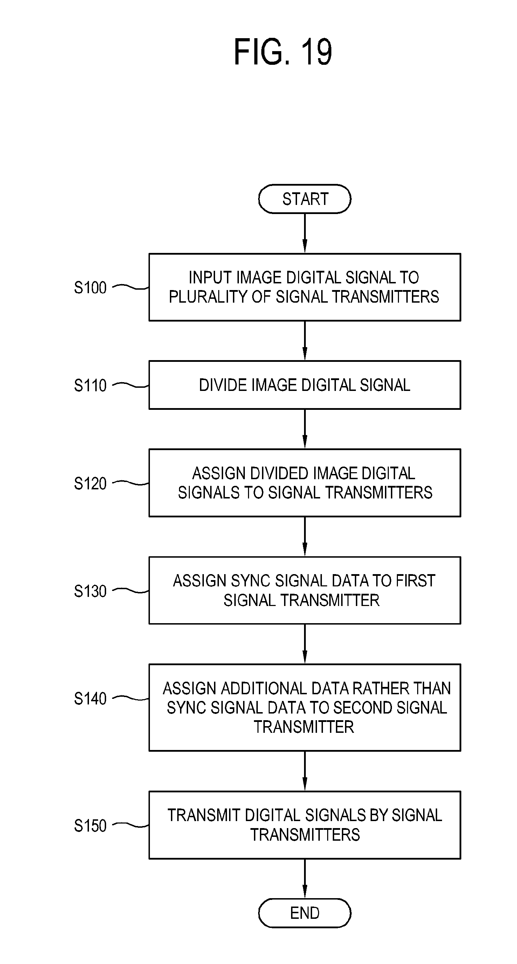

Hereinafter, a signal transmission method according to the present exemplary embodiment will be described with reference to FIG. 19. FIG. 19 is a control flowchart showing a signal transmission process. The signal transmission method in FIG. 19 may be applied to the configuration relating to FIG. 15.

If a digital signal is input to the plurality of signal transmitters 511 and 512 at operation S100, the controller 530 divides the image signal corresponding to the signal transmitters 511 and 512 at operation S110. The controller 530 assigns the divided image signals to the signal transmitters 511 and 512 at operation S120.

The controller 530 assigns the sync signal data to the first signal transmitter 511 at operation S130, and assigns the additional data to the second signal transmitter 512 rather than assigning the sync signal data to the second signal transmitter 512 at operation S140.

If the data are assigned, the controller 530 controls the signal transmitters 511 and 512 to transmit the digital signal at operation S150.

According to the present exemplary embodiment, the sync signal data are transmitted to one of the plurality of signal transmitters 511 and 512, which divides and transmits the digital signals in parallel, and the additional data rather than the sync signal data are transmitted through the other one of the signal transmitters 511 and 512. Therefore, even without providing an additional data transmission channel, the transmission rate of the additional data per clock may increase.

Hereinafter, a fourth exemplary embodiment will be described.

In the foregoing exemplary embodiment in FIG. 4, the image signal is supplied by the image supply source 300 to the first connector 110 of the display apparatus 100 and then transmitted to the display apparatus 100. However, the image signal may be supplied by the image supply source 300 to the upgrading apparatus 200 and then processed by the second image processor 220, and the processed image signal may be transmitted to the display apparatus 100 to thereby display an image on the display unit 130.

When the image signal is output by the upgrading apparatus 200 to the display apparatus 100 and transmitted to an internal element of the display apparatus 100 to display an image on the display unit 130, an asynchronous issue regarding transmission timings of the elements may arise.

For example, the following circumstances may be considered at a predetermined first timing and second timing. The first timing is a timing at which an image signal is transmitted by the upgrading apparatus 200 to the display apparatus 100. The second timing is a timing at which the image signal that has been transmitted by the upgrading apparatus 200 to the display apparatus 100 is output to the display unit 130 of the display apparatus 100, e.g., a timing at which the image signal is transmitted by the first connector 110 to the display unit 130 or a timing at which the image signal is transmitted by the first image processor 120 to the display unit 130.

Due to various factors such as the operation features, environment, or a lapse of usage time of the display apparatus 100 or the upgrading apparatus 200, an asynchronous issue which causes a difference in sync information of an image signal may occur between the first timing and the second timing. If the image signal is displayed in frames on the display unit 130, the frames of the image signal transmitted to the display unit 130 may be displayed too slowly or, on the other hand, may be displayed in a surplus due to such an asynchronous issue.

In the former case, the sync information at the first timing is slower than sync information at the second timing, causing underflow of the image signal in the display apparatus 100. In the latter case, the sync information at the first timing is faster than the sync information at the second timing, causing overflow of the image signal in the display apparatus 100.

As a result of the underflow/overflow of the image signal, as time elapses, the same image may be repeatedly displayed, or an image may not be displayed on the display unit 130 and skipped. This may cause inconvenience for a user, who may then need to manipulate the user input unit 140 to try and view the image correctly.

Thus, the display system 1 according to the present exemplary embodiment has the following configuration.

The image signal which is processed by the upgrading apparatus 200 is transmitted to the display apparatus 100, and then output to the display unit 130 within the display apparatus 100 to display an image. For purposes of convenience, the timing at which the image signal is transmitted by the upgrading apparatus 200 to the display apparatus 100 is also referred to as a first timing, and the timing at which the image signal which is received by the display apparatus 200 is output to the display unit 130 by an internal element of the display apparatus 100 such as the first connector 110 or the first image processor 120 is also referred to as a second timing.

If there is a difference between first sync information at the first image and second sync information at the second timing regarding the image signal, the display apparatus 100 transmits the difference information to the upgrading apparatus 200. Based on the received difference information, the upgrading apparatus 200 transmits the image signal with the first sync information adjusted to the display apparatus 200 to synchronize the first sync information and the second sync information.

Thus, an error which occurs as a result of the operation of the upgrading apparatus 200 in connection with the display of an image in the display apparatus 100 may be prevented. The sync information may include horizontal sync information or vertical sync information, although is not limited thereto and may additionally include other types of sync information.

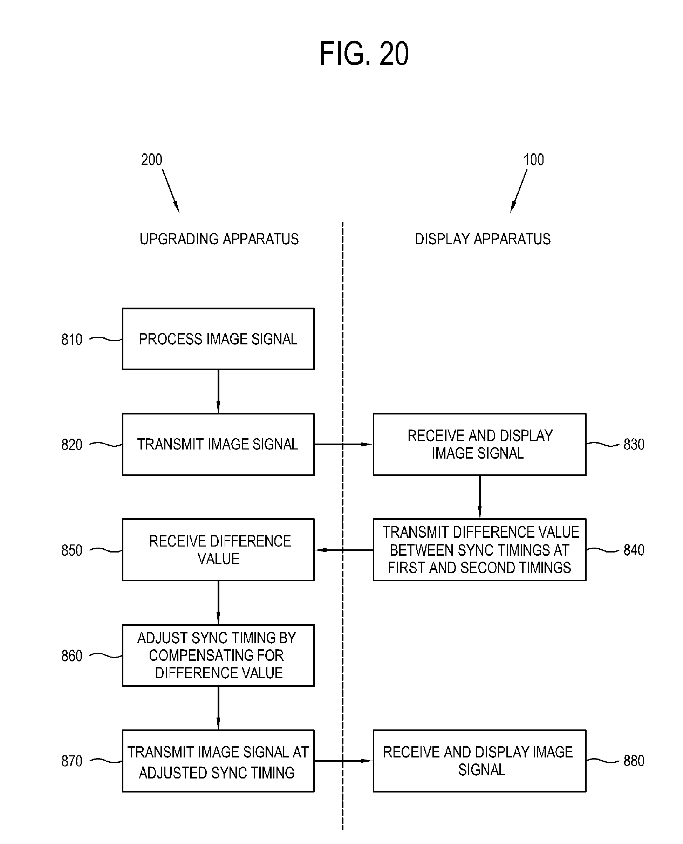

To synchronize the first sync information at the first timing and the second sync information at the second timing, the method of outputting the image signal by the upgrading apparatus 200 to the display apparatus 100 will be described with reference to FIG. 20. FIG. 20 is a flowchart showing a method of outputting the image signal by the upgrading apparatus 200 to the display apparatus 100.

As shown therein, while the upgrading apparatus 200 is connected to the display apparatus 100 and upgrades the display apparatus 100, the upgrading apparatus 200 processes an image signal, which is transmitted through the display apparatus 100 or supplied directly by the image supply source 300, according to the image processing operation at operation 810.

The upgrading apparatus 200 transmits the processed image signal to the display apparatus 100 at the preset sync timing at operation 820. This timing is called the first timing.

The image signal which is transmitted by the upgrading apparatus 200 is output to the display unit 130 through various internal elements of the display apparatus 100 and an image is displayed based on the image signal at operation 830. The image signal is output to the display unit 130 at a preset sync timing, which is called the second timing.

The display apparatus 100 compares the sync timings at the first and second timings and determines whether there is a difference between the sync timings at the two timings. If it is determined that there is a difference in the sync timings, the display apparatus 100 calculates a difference value between the sync timing at the first timing and the sync timing at the second timing and transmits the calculated difference value information to the upgrading apparatus 200 at operation 840.

The difference value information may be provided in various forms. For example, the display apparatus 100 may transmit to the upgrading apparatus 200 clock count information of the sync timing at the second timing, time information at the second timing or a difference value of the sync timing with respect to a reference clock corresponding to the second timing. That is, the difference value information may include any form of information through which the upgrading apparatus 200 may calculate the difference value of the sync timings at the first and second timings.

Upon receiving the difference value from the display apparatus 100 at operation 850, the upgrading apparatus 200 compensates for and adjusts the sync timing at the first timing based on the received difference value at operation 860.

For example, if it is determined that the sync timing at the first timing is different as much as 200 clocks from the sync timing at the second timing, the upgrading apparatus 200 reflects 200 clocks in the sync timing of the first timing.

The upgrading apparatus 200 transmits the image signal to the display apparatus 100 at the adjusted sync timing at operation 870.

The display apparatus 100 displays an image based on the image signal that has been received at the adjusted sync timing at operation 880.

As described above, if there is a difference between the sync timings at the first and second timings, the display apparatus 100 provides the upgrading apparatus 200 with the difference information. Based on the difference information provided by the display apparatus 100, the upgrading apparatus 200 adjusts the sync timing at the first timing and outputs the image signal to the display apparatus 100 at the adjusted sync timing.

As a result, the sync timings at the first and second timings are synchronized, and underflow/overflow of the image signal within the display apparatus 100 is prevented to thereby secure an image quality.

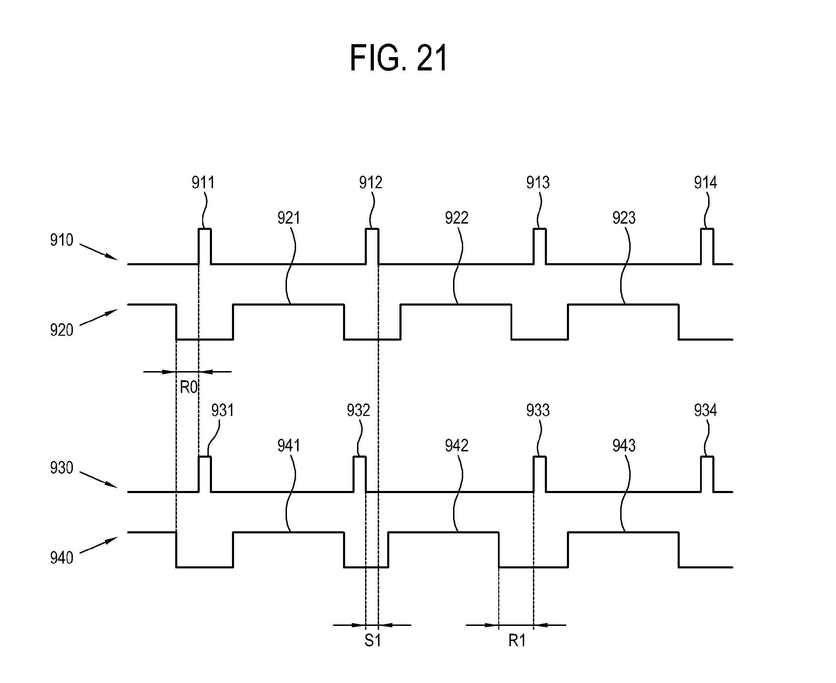

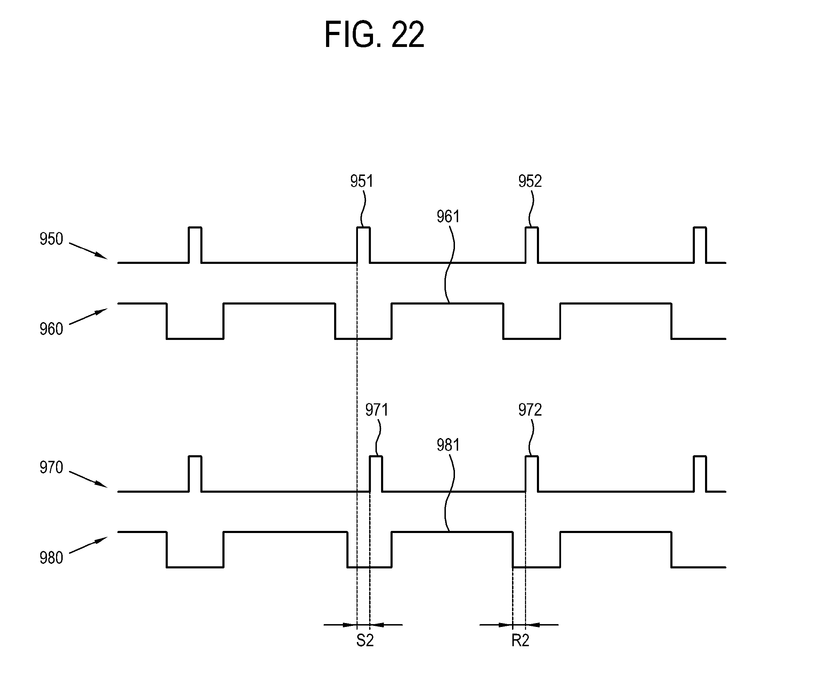

Hereinafter, an exemplary embodiment for adjusting the sync timing at the first timing by the upgrading apparatus 200 based on the difference value will be described with reference to FIGS. 21 and 22. FIG. 21 illustrates a method of adjusting the sync timing at the first timing when the sync timing at the first timing is prior to the sync timing at the second timing. FIG. 22 illustrates a method of adjusting the sync timing at the first timing if the sync timing at the first timing is subsequent to the sync timing at the second timing.

FIG. 21 illustrates four duty ratio graphs 910, 920, 930 and 940.

The first graph 910 shows a sync timing interval of the image signal at the second timing, i.e. at the timing at which the image signal is output to the display unit 130 within the display apparatus 100. The second graph 920 shows an output interval of the image signal output to the display unit 130 corresponding to the sync timing interval at the second timing.

The third graph 930 shows a sync timing interval of the image signal at the first timing, i.e., at the timing at which the image signal is output by the upgrading apparatus 200 to the display apparatus 100. The fourth graph 940 shows an output interval of the image signal output by the upgrading apparatus 200 corresponding to the sync timing interval at the first timing.

In the first graph 910, a plurality of syncs 911, 912, 913 and 914 is formed as time elapses, and a width among the syncs 911, 912, 913 and 914 which are adjacent to one another by time is equal.

The display apparatus 100 outputs the image signal to the display unit 130 as in the second graph 920, corresponding to the syncs 911, 912, 913 and 914. If the first graph 910 relates to a vertical sync, the display apparatus 100 outputs to the display unit 130 image signals 921, 922 and 923 by frame corresponding to the syncs 911, 912, 913 and 914.

There are blanking intervals R0 and R1 between two consecutive frame images, which do not include actual image information. The blanking intervals R0 and R1 may be defined as an interval between a timing at which authorization of single image frame information 921, 922 and 923 is completed, and a timing at which the syncs 911, 912, 913 and 914 are generated to authorize next image frame information.

In the third graph 930, a plurality of syncs 931, 932, 933 and 934 is formed as time elapses, and the upgrading apparatus 200 outputs the image signal to the display apparatus 100 as in the fourth graph 940 corresponding to the syncs 931, 932, 933 and 934. If the first graph 910 and the third graph 930 relate to vertical synchronization, the upgrading apparatus 200 outputs to the display apparatus 100 image signals 941, 942 and 943 by frame corresponding to the syncs 931, 932, 933 and 934.

To prevent underflow or overflow of the display apparatus 100, the syncs 931, 932, 933 and 934 at the first timing should be synchronized with the syncs 911, 912, 913 and 914 at the second timing. For example, the sync 931 in the third graph has the same timing as the sync 911 in the first graph 910 and the blanking interval R0 at the first timing and the second timing is equal.

The sync 932 in the third graph 930 is formed at the sync timing which is prior to the sync timing of the sync 912 in the first graph 910. If the foregoing timing is detected, the display apparatus 100 calculates a difference value S1 between the sync 932 and the sync 912 and transmits the calculated difference value S1 to the upgrading apparatus 200.

The difference value S1 may be a clock value between the sync 932 and the sync 912. Alternatively, the display apparatus 100 may transmit the clock count value of the timing at which the sync 932 is formed or time to the upgrading apparatus 200, and the upgrading apparatus 200 may calculate the difference value S1 based on the clock count value or time. It is understood that the difference value S1 may be calculated in various other ways as well.

Upon receiving the difference value S1 between the sync 932 and the sync 912 from the display apparatus 100, the upgrading apparatus 200 compensates for a timing of a sync 933 which is subsequent to the sync 932, according to the difference value S1.

The upgrading apparatus 200 enlarges the blanking interval R1 between the completion timing of a frame image signal 942 output corresponding to the sync and a timing of the sync 933 which is subsequent to the sync 932. Thus, the sync 933 which is subsequent to the sync 932 is synchronized with the sync 913 which is subsequent to the sync 912. If the sync 933 and the sync 913 are synchronized, the blanking interval is returned to R0 with respect to the subsequent syncs 914 and 934.

The four duty ratio graphs 950, 960, 970 and 980 in FIG. 22 correspond to the graphs 910, 920, 930 and 940 in FIG. 21, respectively, and a detailed description of the graphs 950, 960, 970 and 980 will be omitted.

The difference between the graphs 950, 960, 970 and 980 in FIG. 22 and the graphs 910, 920, 930 and 940 in FIG. 21 is that the sync 971 in the third graph 970 at the first timing is formed at a timing that is subsequent to the timing of the sync 951 in the first graph 950.

The display apparatus 100 calculates a difference value S2 between the sync 971 and the sync 951 and transmits the difference value S2 to the upgrading apparatus 200. To synchronize the sync 972 which is subsequent to the sync 971 and the sync 952 which is subsequent to the sync 951, the upgrading apparatus 200 reduces the blanking interval R2 between the frame image signal 981 output corresponding to the sync 971 and the sync 972.

If the sync timing at the first timing is prior to the sync timing at the second timing, the upgrading apparatus 200 enlarges the blanking interval of the image signal output to the display apparatus 100. If the sync timing at the first timing is subsequent to the sync timing at the second timing, the upgrading apparatus 200 reduces the blanking interval of the image signal output to the display apparatus 100.

As a result, the sync timings at the first and second timings may be synchronized.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units and modules of the above-described apparatuses can include circuitry, a processor, a microprocessor, etc., and may execute a computer program stored in a computer-readable medium.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. A display apparatus comprising:
a display unit;
an image processor which processes an image signal that is input from the outside in at least one preset external input mode according to a preset image processing operation and displays an image on the display unit based on the processed image signal;
a connector to which an upgrading apparatus upgrading the image processing operation is connected; and
a controller which, upon receiving packed data which combine a plurality of image data, and packing information of the packed data from the upgrading apparatus through the connector, controls the image processor to display an image on the display unit based on the plurality of image data which are unpacked based on the packing information.

2. The display apparatus according to claim 1, wherein the packed data are generated by packing the different image data within a scope of an available data bandwidth of the connector.

3. The display apparatus according to claim 1, wherein the packed data comprise image data and graphic data which overlap the image data.

4. The display apparatus according to claim 1, wherein the controller receives a second image signal, which has been converted from a first image signal, from the upgrading apparatus through the connector, and the second image signal is generated by assigning data of at least one first channel of a plurality of channels of the first image signal to at least one second channel of the plurality of channels.

5. The display apparatus according to claim 4, wherein the data of the first channel comprise an alpha value of an image.

6. The display apparatus according to claim 4, wherein the second channel corresponds to two of RGB channels.

7. The display apparatus according to claim 1, wherein the image processor comprises a plurality of signal transmitters which transmits an image signal and a digital signal comprising a sync signal corresponding to the image signal in parallel and a signal receiver which receives the image signal and the digital signal in parallel from the plurality of signal transmitters, and the controller divides and transmits the image signal to the first signal transmitter and at least one second signal transmitter of the plurality of signal transmitters, and controls the plurality of signal transmitters to transmit the sync signal together with a part of the divided image signals through the first signal transmitter and to transmit a preset additional data signal rather than the sync signal together with the remaining divided image signal through the at least one second signal transmitter.

8. The display apparatus according to claim 7, wherein the controller merges the divided image signals which are received by the signal receiver, and processes the merged image signal according to the sync signal transmitted by the first signal transmitter.

9. The display apparatus according to claim 7, wherein one of the signal transmitters comprises a clock transmission channel to transmit a clock signal and a data transmission channel to transmit data in a preset bit according to the clock signal, and the controller transmits the sync signal data through the data transmission channel of the first signal transmitter and does not transmit the sync signal data through the data transmission channel of the at least one second signal transmitter.

10. The display apparatus according to claim 7, wherein the sync signal comprises a horizontal sync signal, a vertical sync signal and a data enable signal.

11. The display apparatus according to claim 1, wherein the controller transmits to the upgrading apparatus difference information between first sync information and second sync information to output the first sync information and the image signal with the first information adjusted to synchronize the second sync information, and the first sync information corresponds to a first timing at which the image signal is transmitted by the upgrading apparatus to the display apparatus, and the second sync information corresponds to a second timing at which the image signal is output to the display unit.

12. The display apparatus according to claim 11, wherein the controller compares a sync timing at the first timing of the image signal and a sync timing at the second timing, and transmits difference value information to the upgrading apparatus so that the image signal is output by the upgrading apparatus corresponding to the timing which compensates for the difference value between the sync timings.

13. The display apparatus according to claim 12, wherein the compensation for the difference value comprises an operation of enlarging a blanking interval of the image signal output by the upgrading apparatus to the display apparatus if the sync timing at the first timing is prior to a sync timing at the second timing, and an operation of reducing the blanking interval if the sync timing at the first timing is subsequent to the sync timing of the second timing.

14. The display apparatus according to claim 12, wherein the difference value information comprises at least one of clock count information of the sync timing at the second timing, time information at the second timing, and a difference value of the sync timing with respect to a reference clock corresponding to the second timing.

15. An upgrading apparatus of a display apparatus comprising:
a connector which is connected to the display apparatus that processes an image signal input in at least one preset external input mode according to a preset image processing operation and displays an image based on the processed image signal;
an image processor which upgrades the image processing operation if the display apparatus is connected to the connector; and
a controller which generates packed data that are formed by combining and packing a plurality of image data, and packing information of the packed data, and transmits the packed data and the packing information to the display apparatus to display an image based on the plurality of image data which is formed by unpacking the packed data based on the packing information.
